(19)

**Europäisches Patentamt**
**European Patent Office**
**Office européen des brevets**

(11)  **EP 2 731 283 B1**

(12)  # EUROPEAN PATENT SPECIFICATION

(45) Date of publication and mention
of the grant of the patent:
**10.10.2018  Bulletin 2018/41**

(51) Int Cl.:
*H04L 5/00* (2006.01)    *H04W 72/04* (2009.01)

(21) Application number: **12804043.3**

(86) International application number:
**PCT/KR2012/005017**

(22) Date of filing: **26.06.2012**

(87) International publication number:
**WO 2013/002528 (03.01.2013 Gazette 2013/01)**

(54)  **METHOD AND APPARATUS FOR ALLOCATING A DOWNLINK CONTROL CHANNEL IN A WIRELESS COMMUNICATION SYSTEM**

VERFAHREN UND VORRICHTUNG ZUR ZUORDNUNG EINES DOWNLINK-STEUERKANALS IN EINEM DRAHTLOSEN KOMMUNIKATIONSSYSTEM

PROCÉDÉ ET APPAREIL POUR ATTRIBUER UN CANAL DE COMMANDE DE LIAISON DESCENDANTE DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2011  US 201161502870 P**
**25.11.2011  US 201161563604 P**

(43) Date of publication of application:
**14.05.2014  Bulletin 2014/20**

(73) Proprietor: **LG Electronics Inc.**
**Yeongdeungpo-gu**
**Seoul, 07336 (KR)**

(72) Inventors:
• **KIM, Ki Tae**
  **Anyang-si**
  **Gyeonggi-do 431-749 (KR)**
• **CHUN, Jin Young**
  **Anyang-si**
  **Gyeonggi-do 431-749 (KR)**
• **KIM, Su Nam**
  **Anyang-si**
  **Gyeonggi-do 431-749 (KR)**
• **KANG, Ji Won**
  **Anyang-si**
  **Gyeonggi-do 431-749 (KR)**
• **IHM, Bin Chul**
  **Anyang-si**
  **Gyeonggi-do 431-749 (KR)**
• **PARK, Sung Ho**
  **Anyang-si**
  **Gyeonggi-do 431-749 (KR)**

(74) Representative: **Ter Meer Steinmeister & Partner Patentanwälte mbB**
**Nymphenburger Straße 4**
**80335 München (DE)**

(56) References cited:
**EP-A2- 2 302 830     WO-A2-2011/021852
KR-A- 20090 083 269**

• **SAMSUNG: 'Discussion on Downlink Control Channel Enhancement' 3GPP TSG- RANL#65 MEETING, RL-111471 09 May 2011, XP050491153 Retrieved from the Internet: <URL:http://www.3gpp.org/ftp/tsg ran/ WG1 RL1/TSGRI 65/Docs/RI-111471.zip> [retrieved on 2010-02-09]**
• **PANASONIC: 'Considerations on PDCCH Enhancements for Release 11' 3GPP TSG- RANL#65 MEETING, RL-111589 09 May 2011, XP050491236 Retrieved from the Internet: <URL:http://www.3gpp.org/ftp/tsg ran/ WG1 RL1/TSGRI 65/Docs/RI-111589.zip> [retrieved on 2010-02-09]**

**Description**

**BACKGROUND OF THE INVENTION**

Field of the Invention

The present invention relates to wireless communications and more particularly, a method and apparatus for allocating a downlink control channel in a wireless communication system including distributed multi-nodes.

Related Art

The next-generation multimedia wireless communication systems which are recently being actively researched are required to process and transmit various pieces of information, such as video and wireless data as well as the initial voice-centered services. The 4th generation wireless communication systems which are now being developed subsequently to the 3rd generation wireless communication systems are aiming at supporting high-speed data service of downlink 1 Gbps (Gigabits per second) and uplink 500 Mbps (Megabits per second). The object of the wireless communication system is to establish reliable communications between a number of users irrespective of their positions and mobility. However, a wireless channel has abnormal characteristics, such as path loss, noise, a fading phenomenon due to multipath, inter-symbol interference (ISI), and the Doppler Effect resulting from the mobility of a user equipment. A variety of techniques are being developed in order to overcome the abnormal characteristics of the wireless channel and to increase the reliability of wireless communication.

Meanwhile, with the employment of machine-to-machine (M2M) communication and with the introduction and distribution of various devices such as a smart phone, a table personal computer (PC), etc., a data requirement size for a cellular network is increased rapidly. To satisfy a high data requirement size, various techniques are under development. A carrier aggregation (CA) technique, a cognitive radio (CR) technique, or the like for effectively using more frequency bands are under research. In addition, a multiple antenna technique, a multiple base station cooperation technique, or the like for increasing data capacity within a limited frequency are under research. That is, eventually, the wireless communication system will be technique, or the like for increasing data capacity within a limited frequency are under research. That is, eventually, the wireless communication system will be evolved in a direction of increasing density of nodes capable of accessing to an area around a user. A wireless communication system having nodes with higher density can provide a higher performance through cooperation between the nodes. That is, a wireless communication system in which each node cooperates has a much higher performance than a wireless communication system in which each node operates as an independent base station (BS), advanced BS (ABS), node-B (NB), eNode-B (eNB), access point (AP), etc.

Methods and apparatus for transmitting and receiving Downlink Control Information (DCI) in a single cell in order to support communication over multiple cells is described in EP2302830 A2. The DCI formats in the E-PDCCH are transmitted in CCEs, the CCE allocation being in PRBs for the E-PDCCH.

A distributed multi-node system (DMNS) comprising a plurality of nodes within a cell may be used to improve performance of a wireless communication system. The DMNS may include a distributed antenna system (DAS), a radio remote head (RRH), and so on. Also, standardization work is underway for various multiple-input multiple-output (MIMO) techniques and cooperative communication techniques already developed or applicable in a future so that they can be applied to the DMNS. Link quality is expected to be improved by employing the DMNS. However, introduction of a new control channel is also required for application of various MIMO techniques and cooperative techniques to the DMNS.

A method for allocating a new control channel for a multi-node system efficiently is required,

**SUMMARY OF THE INVENTION**

The objects are solved by the features of the independent claims. The present invention provides a method and apparatus for allocating a downlink control channel in a wireless communication system. The present invention provides a method for allocating a new downlink control channel to support a plurality of nodes in a multi-node system comprising a plurality of nodes in one or multiple cells. The present invention defines an enhanced physical control format indicator channel (e-PCFICH) indicating position information of a new downlink control channel to support a plurality of nodes. The present invention provides a method for minimizing complexity of blind decoding for a user equipment (UE) to detect an e-PDCCH efficiently.

In an aspect, a method for allocating, by a base station, a downlink control channel in a wireless communication system according to claim 1 is provided.

In another aspect, a method for detecting, by a user equipment, a downlink control channel in a wireless communication system according to claim 7 is provided. Further embodiments of the invention are provided in the dependent claims. In the following, embodiments not falling within the scope of the claims should be understood as examples useful for understanding the invention.

An e-PDCCH for a multi-node system can be allocated efficiently.

## BRIEF DESCRIPTION OF THE DRAWINGS

FIG. 1 shows a wireless communication system.
FIG. 2 shows a structure of a radio frame in 3GPP LTE.
FIG. 3 shows an example of a resource grid of a single downlink slot.
FIG. 4 shows a structure of a downlink subframe.
FIG. 5 shows a structure of an uplink subframe.
FIG. 6 shows an example of a multi-node system.
FIGS. 7 to 9 show examples of an RB to which a CRS is mapped.
FIG. 10 shows an example of an RB to which a DMRS is mapped.
FIG. 11 shows an example of an RB to which a CSI-RS is mapped.
FIG. 12 shows an example where a PCFICH, PDCCH, and PDSCH are mapped to a subframe.
FIG. 13 shows an example of resource allocation through an e-PDCCH.
FIG. 14 shows an example of an R-PDCCH allocated to an RB.
FIG. 15 shows an example of an e-PDCCH allocated to an RB.
FIG. 16 shows another example of an e-PDCCH allocated to an RB.
FIG. 17 shows another example of an e-PDCCH allocated to an RB.
FIG. 18 shows another example of an e-PDCCH allocated to an RB.
FIG. 19 shows an example of mapping an e-PDCCH to an RB according to a proposed method for allocating an e-PDCCH.
FIG. 20 shows another example of mapping an e-PDCCH to an RB according to a proposed method for allocating an e-PDCCH.
FIG. 21 shows another example of mapping an e-PDCCH to an RB according to a proposed method for allocating an e-PDCCH.
FIG. 22 shows another example of mapping an e-PDCCH to an RB according to a proposed method for allocating an e-PDCCH.
FIG. 23 shows an example of constructing a search space of an e-PDCCH according to an aggregation level when a plurality of CCEs is allocated to the e-PDCCH according to a proposed method for allocating an e-PDCCH.
FIG. 24 shows an example of resource division for allocating CCEs in one RB according to a proposed method for allocating an e-PDCCH.
FIG. 25 shows another example of resource division for allocating CCEs in one RB according to a proposed method for allocating an e-PDCCH.
FIG. 26 shows another example of resource division for allocating CCEs in one RB according to a proposed method for allocating an e-PDCCH.
FIG. 27 shows a case where e-PDCCHs of a plurality of UEs are multiplexed into one RB according to a proposed method for allocating an e-PDCCH.
FIG. 28 shows an embodiment of a proposed method for allocating an e-PDCCH.
FIG. 29 shows embodiment of a proposed method for detecting an e-PDCCH.
FIG. 30 is a block diagram showing wireless communication system to implement an embodiment of the present invention.

## DESCRIPTION OF EXEMPLARY EMBODIMENTS

The following technique may be used for various wireless communication systems such as code division multiple access (CDMA), a frequency division multiple access (FDMA), time division multiple access (TDMA), orthogonal frequency division multiple access (OFDMA), single carrier-frequency division multiple access (SC-FDMA), and the like. The CDMA may be implemented as a radio technology such as universal terrestrial radio access (UTRA) or CDMA2000. The TDMA may be implemented as a radio technology such as a global system for mobile communications (GSM)/general packet radio service (GPRS)/enhanced data rates for GSM evolution (EDGE). The OFDMA may be implemented by a radio technology such as institute of electrical and electronics engineers (IEEE) 802.11 (Wi-Fi), IEEE 802.16 (WiMAX), IEEE 802.20, E-UTRA (Evolved UTRA), and the like. IEEE 802.16m, an evolution of IEEE 802.16e, provides backward compatibility with a system based on IEEE 802.16e. The UTRA is part of a universal mobile telecommunications system

(UMTS). 3rd generation partnership project (3GPP) long term evolution (LTE) is part of an evolved UMTS (E-UMTS) using the E-UTRA, which employs the OFDMA in downlink and the SC-FDMA in uplink. LTE-advanced (LTE-A) is an evolution of 3GPP LTE.

Hereinafter, for clarification, LTE-A will be largely described, but the technical concept of the present invention is not meant to be limited thereto.

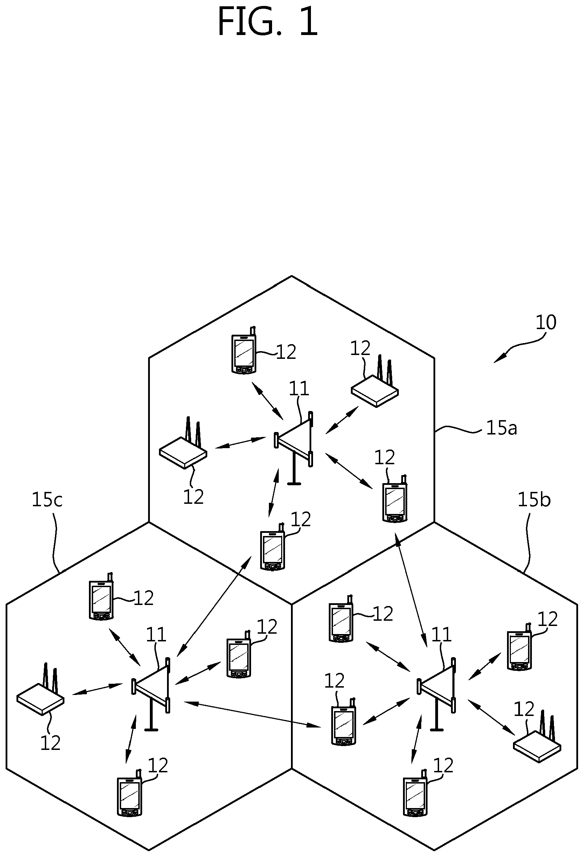

FIG. 1 shows a wireless communication system.

The wireless communication system 10 includes at least one base station (BS) 11. Respective BSs 11 provide a communication service to particular geographical areas 15a, 15b, and 15c (which are generally called cells). Each cell may be divided into a plurality of areas (which are called sectors). A user equipment (UE) 12 may be fixed or mobile and may be referred to by other names such as mobile station (MS), mobile user equipment (MT), user user equipment (UT), subscriber station (SS), wireless device, personal digital assistant (PDA), wireless modem, handheld device. The BS 11 generally refers to a fixed station that communicates with the UE 12 and may be called by other names such as evolved-NodeB (eNB), base transceiver system (BTS), access point (AP), etc.

In general, a UE belongs to one cell, and the cell to which a UE belongs is called a serving cell. A BS providing a communication service to the serving cell is called a serving BS. The wireless communication system is a cellular system, so a different cell adjacent to the serving cell exists. The different cell adjacent to the serving cell is called a neighbor cell. A BS providing a communication service to the neighbor cell is called a neighbor BS. The serving cell and the neighbor cell are relatively determined based on a UE.

This technique can be used for downlink or uplink. In general, downlink refers to communication from the BS 11 to the UE 12, and uplink refers to communication from the UE 12 to the BS 11. In downlink, a transmitter may be part of the BS 11 and a receiver may be part of the UE 12. In uplink, a transmitter may be part of the UE 12 and a receiver may be part of the BS 11.

The wireless communication system may be any one of a multiple-input multiple-output (MIMO) system, a multiple-input single-output (MISO) system, a single-input single-output (SISO) system, and a single-input multiple-output (SIMO) system. The MIMO system uses a plurality of transmission antennas and a plurality of reception antennas. The MISO system uses a plurality of transmission antennas and a single reception antenna. The SISO system uses a single transmission antenna and a single reception antenna. The SIMO system uses a single transmission antenna and a plurality of reception antennas. Hereinafter, a transmission antenna refers to a physical or logical antenna used for transmitting a signal or a stream, and a reception antenna refers to a physical or logical antenna used for receiving a signal or a stream.

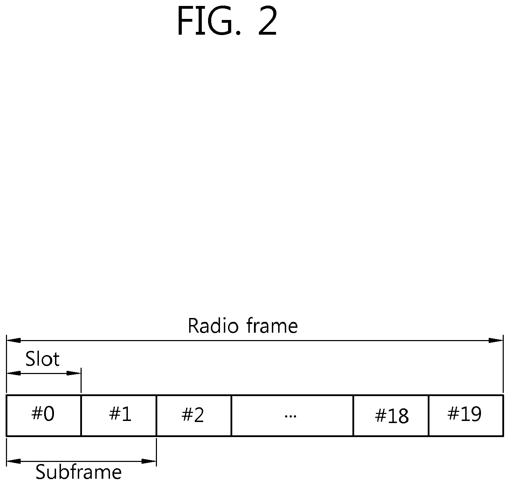

FIG. 2 shows a structure of a radio frame in 3GPP LTE.

It may be referred to Paragraph 5 of "Technical Specification Group Radio Access Network; Evolved Universal Terrestrial Radio Access (E-UTRA); Physical channels and modulation (Release 8)" to 3GPP (3rd generation partnership project) TS 36.211 V8.2.0 (2008-03). Referring to FIG. 2, the radio frame includes 10 subframes, and one subframe includes two slots. The slots in the radio frame are numbered by #0 to #19. A time taken for transmitting one subframe is called a transmission time interval (TTI). The TTI may be a scheduling unit for a data transmission. For example, a radio frame may have a length of 10 ms, a subframe may have a length of 1 ms, and a slot may have a length of 0.5 ms.

One slot includes a plurality of orthogonal frequency division multiplexing (OFDM) symbols in a time domain and a plurality of subcarriers in a frequency domain. Since 3GPP LTE uses OFDMA in downlink, the OFDM symbols are used to express a symbol period. The OFDM symbols may be called by other names depending on a multiple-access scheme. For example, when SC-FDMA is in use as an uplink multi-access scheme, the OFDM symbols may be called SC-FDMA symbols. A resource block (RB), a resource allocation unit, includes a plurality of continuous subcarriers in a slot. The structure of the radio frame is merely an example. Namely, the number of subframes included in a radio frame, the number of slots included in a subframe, or the number of OFDM symbols included in a slot may vary.

3GPP LTE defines that one slot includes seven OFDM symbols in a normal cyclic prefix (CP) and one slot includes six OFDM symbols in an extended CP.

The wireless communication system may be divided into a frequency division duplex (FDD) scheme and a time division duplex (TDD) scheme. According to the FDD scheme, an uplink transmission and a downlink transmission are made at different frequency bands. According to the TDD scheme, an uplink transmission and a downlink transmission are made during different periods of time at the same frequency band. A channel response of the TDD scheme is substantially reciprocal. This means that a downlink channel response and an uplink channel response are almost the same in a given frequency band. Thus, the TDD-based wireless communication system is advantageous in that the downlink channel response can be obtained from the uplink channel response. In the TDD scheme, the entire frequency band is time-divided for uplink and downlink transmissions, so a downlink transmission by the BS and an uplink transmission by the UE cannot be simultaneously performed. In a TDD system in which an uplink transmission and a downlink transmission are discriminated in units of subframes, the uplink transmission and the downlink transmission are performed in different subframes.

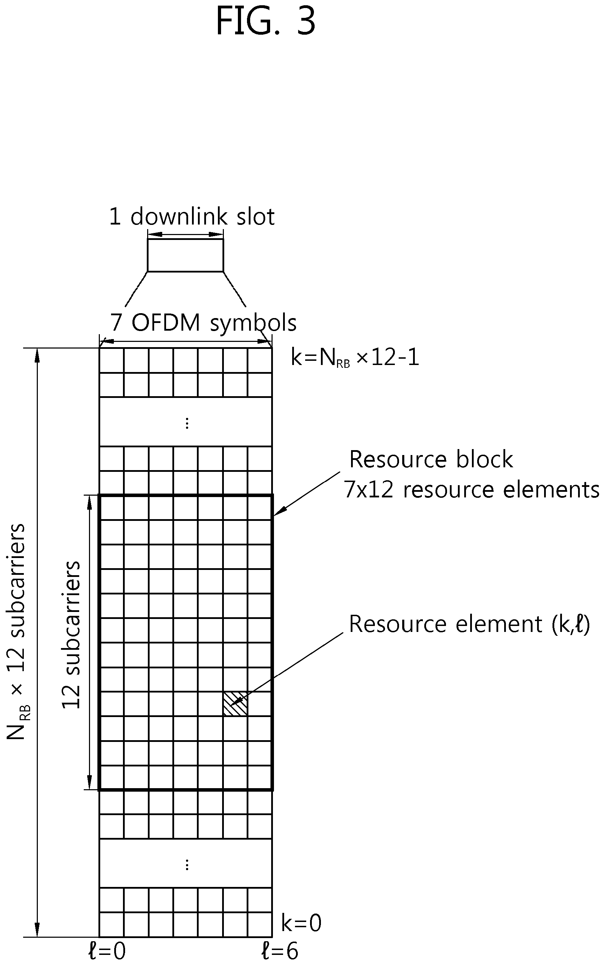

FIG. 3 shows an example of a resource grid of a single downlink slot.

A downlink slot includes a plurality of OFDM symbols in the time domain and $N_{RB}$ number of resource blocks (RBs) in the frequency domain. The $N_{RB}$ number of resource blocks included in the downlink slot is dependent upon a downlink transmission bandwidth set in a cell. For example, in an LTE system, $N_{RB}$ may be any one of 6 to 110. One resource block includes a plurality of subcarriers in the frequency domain. An uplink slot may have the same structure as that of the downlink slot.

Each element on the resource grid is called a resource element. The resource elements on the resource grid can be identified by a pair of indexes (k,l) in the slot. Here, k ($k=0,...,N_{RB}\times12-1$) is a subcarrier index in the frequency domain, and 1 is an OFDM symbol index in the time domain.

Here, it is illustrated that one resource block includes 7x12 resource elements made up of seven OFDM symbols in the time domain and twelve subcarriers in the frequency domain, but the number of OFDM symbols and the number of subcarriers in the resource block are not limited thereto. The number of OFDM symbols and the number of subcarriers may vary depending on the length of a CP, frequency spacing, and the like. For example, in case of a normal CP, the number of OFDM symbols is 7, and in case of an extended CP, the number of OFDM symbols is 6. One of 128, 256, 512, 1024, 1536, and 2048 may be selectively used as the number of subcarriers in one OFDM symbol.

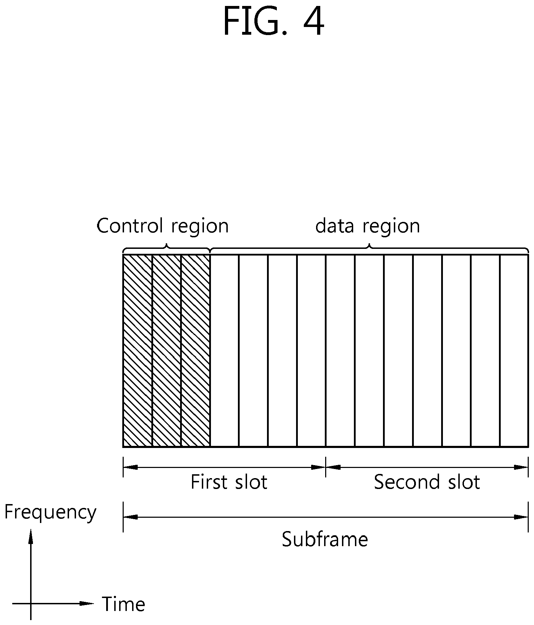

FIG. 4 shows a structure of a downlink subframe.

A downlink subframe includes two slots in the time domain, and each of the slots includes seven OFDM symbols in the normal CP. First three OFDM symbols (maximum four OFDM symbols for a 1.4 MHz bandwidth) of a first slot in the subframe corresponds to a control region to which control channels are allocated, and the other remaining OFDM symbols correspond to a data region to which a physical downlink shared channel (PDSCH) is allocated.

The PDCCH may carry a transmission format and a resource allocation of a downlink shared channel (DL-SCH), resource allocation information of an uplink shared channel (UL-SCH), paging information on a PCH, system information on a DL-SCH, a resource allocation of an higher layer control message such as a random access response transmitted via a PDSCH, a set of transmission power control commands with respect to individual UEs in a certain UE group, an activation of a voice over internet protocol (VoIP), and the like. A plurality of PDCCHs may be transmitted in the control region, and a UE can monitor a plurality of PDCCHs. The PDCCHs are transmitted on one or an aggregation of a plurality of consecutive control channel elements (CCE). The CCE is a logical allocation unit used to provide a coding rate according to the state of a wireless channel. The CCE corresponds to a plurality of resource element groups. The format of the PDCCH and an available number of bits of the PDCCH are determined according to an associative relation between the number of the CCEs and a coding rate provided by the CCEs.

The BS determines a PDCCH format according to a DCI to be transmitted to the UE, and attaches a cyclic redundancy check (CRC) to the DCI. A unique radio network temporary identifier (RNTI) is masked on the CRC according to the owner or the purpose of the PDCCH. In case of a PDCCH for a particular UE, a unique identifier, e.g., a cell-RNTI (C-RNTI), of the UE, may be masked on the CRC. Or, in case of a PDCCH for a paging message, a paging indication identifier, e.g., a paging-RNTI (P-RNTI), may be masked on the CRC. In case of a PDCCH for a system information block (SIB), a system information identifier, e.g., a system information-RNTI (SI-RNTI), may be masked on the CRC. In order to indicate a random access response, i.e., a response to a transmission of a random access preamble of the UE, a random access-RNTI (RA-RNTI) may be masked on the CRC.

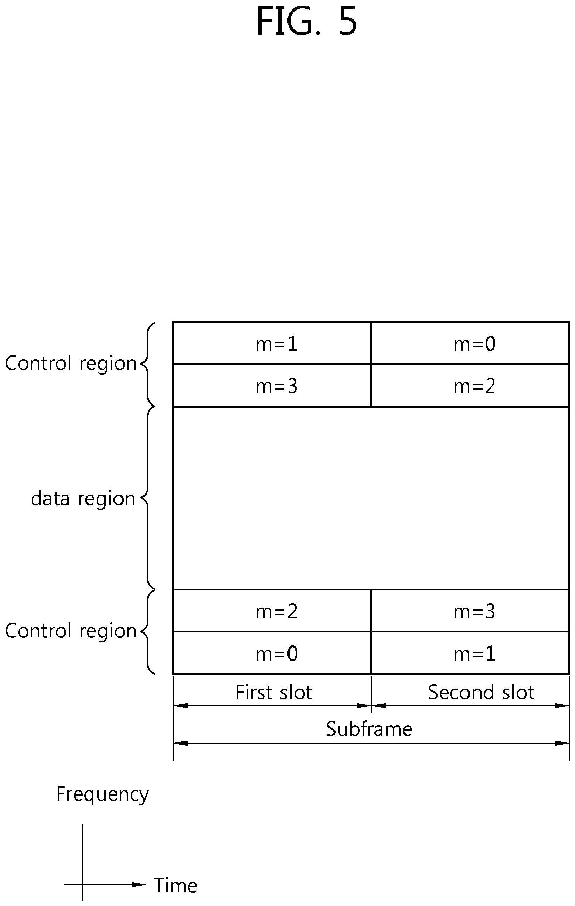

FIG. 5 shows a structure of an uplink subframe.

An uplink subframe may be divided into a control region and a data region in the frequency domain. A physical uplink control channel (PUCCH) for transmitting uplink control information is allocated to the control region. A physical uplink shared channel (PUCCH) for transmitting data is allocated to the data region. When indicated by a higher layer, the UE may support a simultaneous transmission of the PUSCH and the PUCCH.

The PUCCH for a UE is allocated by a pair of RBs in a subframe. The resource blocks belonging to the pair of RBs occupy different subcarriers in first and second slots, respectively. The frequency occupied by the RBs belonging to the pair of RBs is changed based on a slot boundary. This is said that the pair of RBs allocated to the PUCCH is frequency-hopped at the slot boundary. The UE can obtain a frequency diversity gain by transmitting uplink control information through different subcarriers according to time. In FIG. 5, m is a position index indicating the logical frequency domain positions of the pair of RBs allocated to the PUCCH in the subframe.

Uplink control information transmitted on the PUCCH may include a hybrid automatic repeat request (HARQ) acknowledgement/non-acknowledgement (ACK/NACK), a channel quality indicator (CQI) indicating the state of a downlink channel, a scheduling request (SR), and the like.

The PUSCH is mapped to an uplink shared channel (UL-SCH), a transport channel. Uplink data transmitted on the PUSCH may be a transport block, a data block for the UL-SCH transmitted during the TTI. The transport block may be user information. Or, the uplink data may be multiplexed data. The multiplexed data may be data obtained by multiplexing the transport block for the UL-SCH and control information. For example, control information multiplexed to data may include a CQI, a precoding matrix indicator (PMI), an HARQ, a rank indicator (RI), or the like. Or the uplink data may include only control information.

To improve a performance of the wireless communication system, a technique is evolved in a direction of increasing density of nodes capable of accessing to an area around a user. A wireless communication system having nodes with higher density can provide a higher performance through cooperation between the nodes.

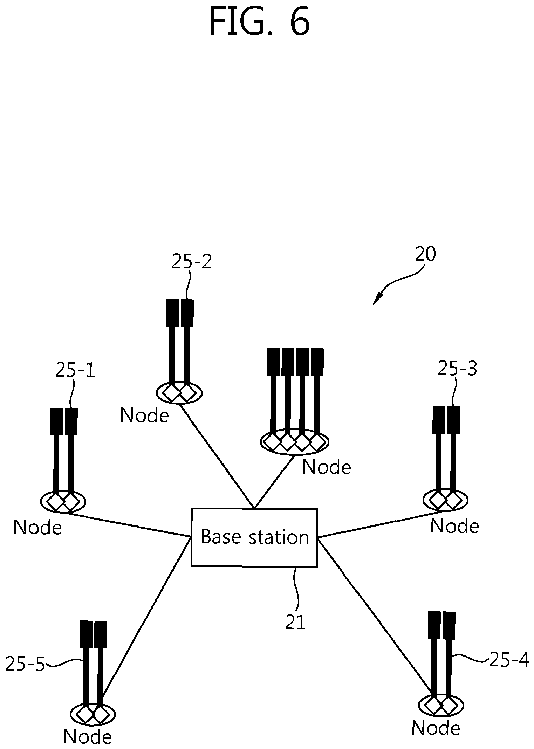

FIG. 6 shows an example of a multi-node system.

Referring to FIG. 6, a multi-node system 20 may consist of one BS 21 and a plurality of nodes 25-1, 25-2, 25-3, 25-4, and 25-5. The plurality of nodes 25-1, 25-2, 25-3, 25-4, and 25-5 may be managed by one BS 21. That is, the plurality of nodes 25-1, 25-2, 25-3, 25-4, and 25-5 operate as if they are a part of one cell. In this case, each of the nodes 25-1, 25-2, 25-3, 25-4, and 25-5 may be allocated a separate node identifier (ID), or may operate as if it is a part of an antenna group without an additional node ID. In this case, the multi-node system 20 of FIG. 6 may be regarded as a distributed multi node system (DMNS) which constitutes one cell.

Alternatively, the plurality of nodes 25-1, 25-2, 25-3, 25-4, and 25-5 may have separate cell IDs and perform a handover (HO) and scheduling of the UE. In this case, the multi-node system 20 of FIG. 6 may be regarded as a multi-cell system. The BS 21 may be a macro cell. Each node may be a femto cell or pico cell having cell coverage smaller than cell coverage of a macro cell. As such, if a plurality of cells is configured in an overlaid manner according to coverage, it may be called a multi-tier network.

In FIG. 6, each of the nodes 25-1, 25-2, 25-3, 25-4, and 25-5 may be any one of a BS, a Node-B, an eNode-B, a pico cell eNB (PeNB), a home eNB (HeNB), a remote radio head (RRH), a relay station (RS) or repeater, and a distributed antenna. At least one antenna may be installed in one node. In addition, the node may be called a point. In the following descriptions, a node implies an antenna group separated by more than a specific interval in a DMNS. That is, it is assumed in the following descriptions that each node implies an RRH in a physical manner. However, the present invention is not limited thereto, and the node may be defined as any antenna group irrespective of a physical interval. For example, the present invention may be applied by considering that a node consisting of horizontal polarized antennas and a node consisting of vertical polarized antennas constitute a BS consisting of a plurality of cross polarized antennas. In addition, the present invention may be applied to a case where each node is a pico cell or femto cell having smaller cell coverage than a macro cell, that is, to a multi-cell system. In the following descriptions, an antenna may be replaced with an antenna port, virtual antenna, antenna group, as well as a physical antenna.

Hereinafter, a reference signal (RS) is described.

In general, a reference signal (RS) is transmitted as a sequence. Any sequence may be used as a sequence used for an RS sequence without particular restrictions. The RS sequence may be a phase shift keying (PSK)-based computer generated sequence. Examples of the PSK include binary phase shift keying (BPSK), quadrature phase shift keying (QPSK), etc. Alternatively, the RS sequence may be a constant amplitude zero auto-correlation (CAZAC) sequence. Examples of the CAZAC sequence include a Zadoff-Chu (ZC)-based sequence, a ZC sequence with cyclic extension, a ZC sequence with truncation, etc. Alternatively, the RS sequence may be a pseudo-random (PN) sequence. Examples of the PN sequence include an m-sequence, a computer generated sequence, a Gold sequence, a Kasami sequence, etc. In addition, the RS sequence may be a cyclically shifted sequence.

A downlink RS may be classified into a cell-specific reference signal (CRS), a multimedia broadcast and multicast single frequency network (MBSFN) reference signal, a UE-specific reference signal, a positioning reference signal (PRS), and a channel state information reference signal (CS-RS). The CRS is an RS transmitted to all UEs in a cell, and is used in channel measurement for a channel quality indicator (CQI) feedback and channel estimation for a PDSCH. The MBSFN reference signal may be transmitted in a subframe allocated for MBSFN transmission. The UE-specific RS is an RS received by a specific UE or a specific UE group in the cell, and may also be called a demodulation reference signal (DMRS). The DMRS is primarily used for data demodulation of a specific UE or a specific UE group. The PRS may be used for location estimation of the UE. The CSI RS is used for channel estimation for a PDSCH of a LTE-A UE. The CSI RS is relatively sparsely deployed in a frequency domain or a time domain, and may be punctured in a data region of a normal subframe or an MBSFN subframe. If required, a channel quality indicator (CQI), a precoding matrix indicator (PMI), a rank indicator (RI), etc., may be reported from the UE through CSI estimation.

A CRS is transmitted from all of downlink subframes within a cell supporting PDSCH transmission. The CRS may be transmitted through antenna ports 0 to 3 and may be defined only for $\Delta f$ = 15 kHz. The CRS may be referred to Section 6.10.1 of 3rd generation partnership project (3GPP) TS 36.211 V10.1.0 (2011-03) "Technical Specification Group Radio Access Network: Evolved Universal Terrestrial Radio Access (E-UTRA): Physical channels and modulation (Release 8)".

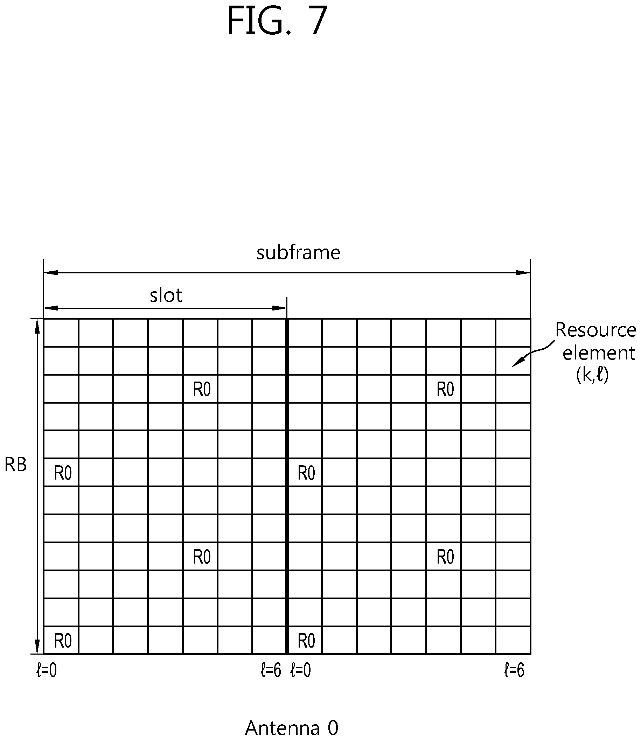

FIGS. 7 to 9 show examples of an RB to which a CRS is mapped.

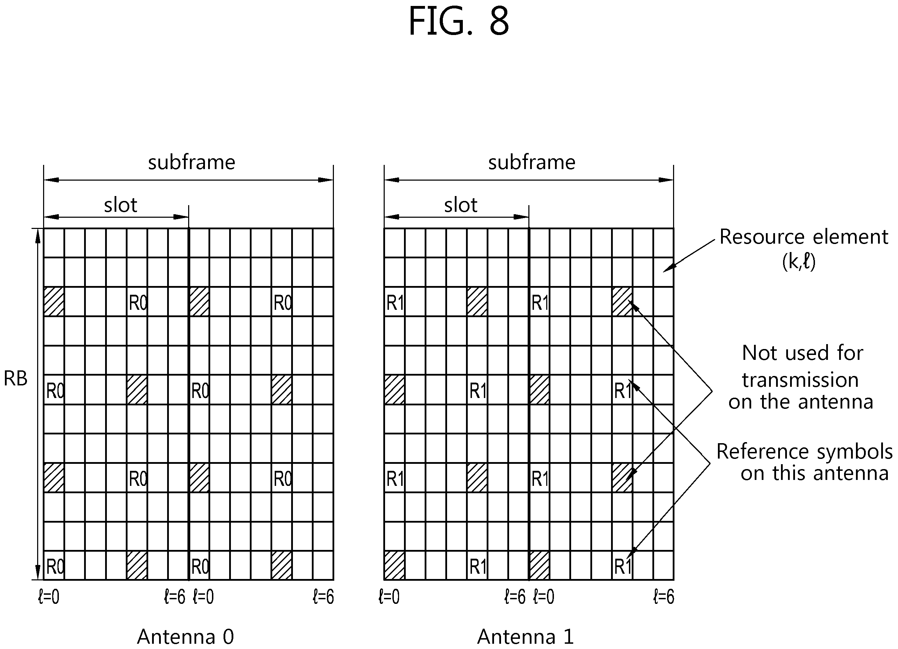

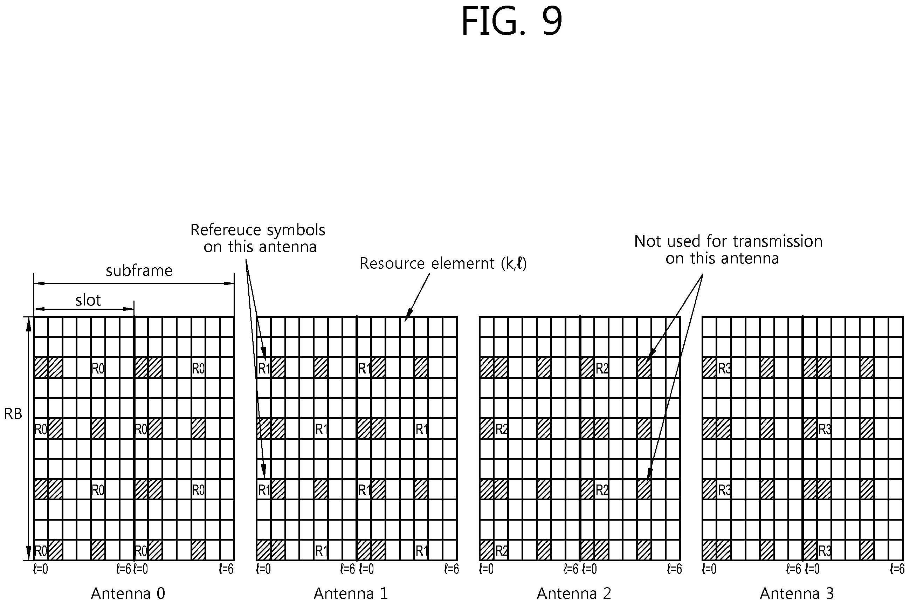

FIG. 7 shows one example of a pattern in which a CRS is mapped to an RB when a base station uses a single antenna port. FIG. 8 shows one example of a pattern in which a CRS is mapped to an RB when a base station uses two antenna ports. FIG. 9 shows one example of a pattern in which a CRS is mapped to an RB when a base station uses four antenna ports. The CRS patterns may be used to support features of the LTE-A. For example, the CRS patterns may be used to support coordinated multi-point (CoMP) transmission/reception technique, spatial multiplexing, etc. Also, the CRS may be used for channel quality measurement, CP detection, time/frequency synchronization, etc.

Referring to FIGS. 7 to 9, in case the base station carries out multiple antenna transmission using a plurality of antenna ports, one resource grid is allocated to each antenna port. 'R0' represents a reference signal for a first antenna port. 'R1' represents a reference signal for a second antenna port. 'R2' represents a reference signal for a third antenna port. 'R3' represents a reference signal for a fourth antenna port. Positions of R0 to R3 within a subframe do not overlap with each other. $\ell$, representing the position of an OFDM symbol within a slot, may take a value ranging from 0 to 6 in a normal CP. In one OFDM symbol, a reference signal for each antenna port is placed apart by an interval of six subcarriers. The number of R0 and the number of R1 in a subframe are the same to each other while the number of R2 and the number of R3 are the same to each other. The number of R2 or R3 within a subframe is smaller than the number of R0 or R1. A resource element used for a reference signal of one antenna port is not used for a reference signal of another antenna port. This is intended to avoid generating interference among antenna ports.

The CRSs are always transmitted as many as the number of antenna ports regardless of the number of streams. The CRS has a separate reference signal for each antenna port. The frequency domain position and time domain position of the CRS within a subframe are determined regardless of user equipments. The CRS sequence multiplied to the CRS is also generated regardless of user equipments. Therefore, all of user equipments within a cell may receive the CRS. However, it should be noted that the CRS position within a subframe and the CRS sequence may be determined according to cell IDs. The time domain position of the CRS within a subframe may be determined according to an antenna port number and the number of OFDM symbols within a resource block. The frequency domain position of the CRS within a subframe may be determined according to an antenna port number, cell ID, OFDM symbol index ($\ell$), a slot number within a radio frame, etc.

The CRS sequence may be applied in unit of OFDM symbol within one subframe. The CRS sequence is varied according to a cell ID, a slot number within one radio frame, OFDM symbol index within the slot, type of CP, etc. Two reference signal subcarriers are involved for each antenna port on one OFDM symbol. In case a subframe includes $N_{RB}$ resource blocks in the frequency domain, the number of reference signal subcarriers for each antenna becomes $2 \times N_{RB}$ on one OFDM symbol. Accordingly, a length of a CRS sequence is $2 \times N_{RB}$.

Equation 1 shows an example of a CRS sequence r(m).

<Equation 1>

$$r(m) = \frac{1}{\sqrt{2}}\left(1 - 2 \cdot c(2m)\right) + j\frac{1}{\sqrt{2}}\left(1 - 2 \cdot (2m+1)\right)$$

where m is 0, 1, ..., $2N_{RB}^{max}$-1. $2N_{RB}^{max}$-1 is the number of resource blocks corresponding to the maximum bandwidth. For example, in the 3GPP LTE system, $2N_{RB}^{max}$-1 is 110. c(i), a PN sequence, is a pseudo-random sequence, which may be defined by the Gold sequence of length 31. Equation 2 shows an example of the gold sequence c(n) .

<Equation 2>

$$c(n) = \left(x_1(n+N_C) + x_2(n+N_C)\right) \bmod 2$$

$$x_1(n+31) = \left(x_1(n+3) + x_1(n)\right) \bmod 2$$

$$x_2(n+31) = \left(x_2(n+3) + x_2(n+2) + x_2(n+1) + x_2(n)\right) \bmod 2$$

where $N_C$ is 1600. $x_1(i)$ is a first m-sequence, and $x_2(i)$ is a second m-sequence. For example, the first m-sequence or the second m-sequence may be initialized for each OFDM symbol according to a cell ID, slot number within one radio frame, OFDM symbol index within the slot, type of CP, etc.

In the case of a system having bandwidth smaller than $2N_{RB}^{max}$, only the specific part of length $2 \times N_{RB}$ from a reference signal sequence of length $2N_{RB}^{max}$ may be used.

Frequency hopping may be applied to the CRS. The period of frequency hopping pattern may be one radio frame (10 ms), and each frequency hopping pattern corresponds to one cell identity group.

At least one downlink sub frame may be made of an MBSFN subframes by a higher layer within a radio frame on a carrier supporting PDSCH transmission. Each MBSFN subframe may be divided into a non-MBSFN region and an MBSFN region. The non-MBSFN region may occupy first one or two OFDM symbols within the MBSFN subframe. Transmission in the non-MBSFN region may be carried out based on the same CP as the one used in a first subframe (subframe #0) within a radio frame. The MBSFN region may be defined by OFDM symbols not used for the non-MBSFN region. The MBSFN reference signal is transmitted only when a physical multicast channel (PMCH) is transmitted, which is carried out through an antenna port 4. The MBSFN reference signal may be defined only in an extended CP.

A DMRS supports for PDSCH transmission, and is transmitted on the antenna port p=5, p=, 8 or p=7, 8, ..., v+6. At this time, v represents the number of layers used for PDSCH transmission. The DMRS is transmitted to one user equipment through any of the antenna ports belonging to a set S, where S = {7, 8, 11, 13} or S = {9, 10, 12, 14}. The DMRS is defined for demodulation of PDSCH and valid only when transmission of PDSCH is associated with the corresponding antenna port. The DMRS is transmitted only from a RB to which the corresponding PDSCH is mapped. The DMRS, regardless of the antenna port, is not transmitted in a resource element to which either of a physical channel and a physical signal is transmitted. The DMRS may be referred to Section 6.10.3 of the 3rd generation partnership project (3GPP) TS 36.211 V10.1.0 (2011-03) "Technical Specification Group Radio Access Network; Evolved Universal Terrestrial Radio Access (E-UTRA): Physical channels and modulation (Release 8)".

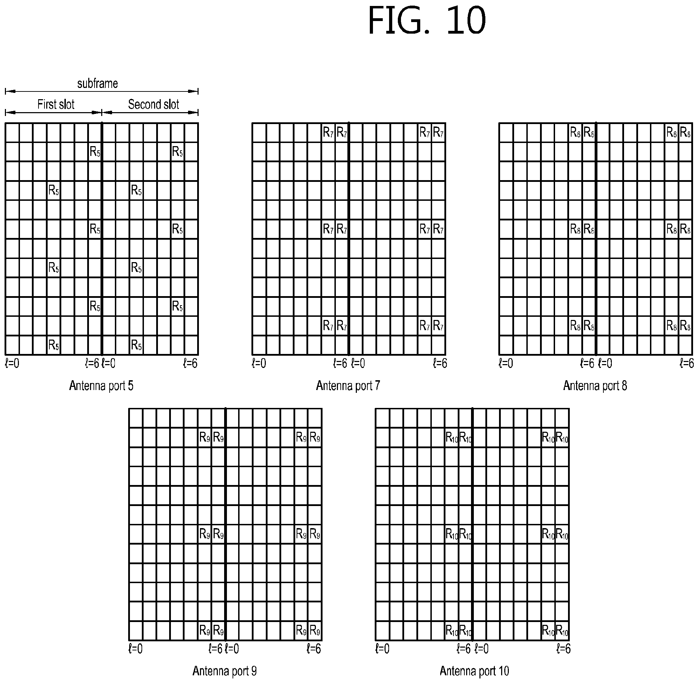

FIG. 10 shows an example of an RB to which a DMRS is mapped.

FIG. 10 shows resource elements used for the DMRS in a normal CP structure. $R_p$ denotes resource elements used for DMRS transmission on an antenna port p. For example, $R_5$ denotes resource elements used for DMRS transmission on an antenna port 5. Also, referring to FIG. 10, the DMRS for an antenna port 7 and 8 are transmitted through resource elements corresponding to a first, sixth, and eleventh subcarriers (subcarrier index 0, 5, 10) of a sixth and seventh OFDM symbol (OFDM symbol index 5, 6) for each slot. The DMRS for the antenna port 7 and 8 may be identified by an orthogonal sequence of length 2. The DMRS for an antenna port 9 and 10 are transmitted through resource elements corresponding to a second, seventh, and twelfth sub-carriers (subcarrier index 1, 6, 11) of a sixth and seventh OFDM symbol (OFDM symbol index 5, 6) for each slot. The DMRS for the antenna port 9 and 10 may be identified by an orthogonal sequence of length 2. Since S = {7, 8, 11, 13} or S = {9, 10, 12, 14}, the DMRS for the antenna port 11 and 13 are mapped to resource elements to which the DMRS for the antenna port 7 and 8 are mapped, while the DMRS for the antenna port 12 and 14 are mapped to resource elements to which the DMRS for the antenna port 9 and 10 are mapped.

A CSI RS is transmitted through one, two, four, or eight antenna ports. The antenna ports used for each case is p=15, p=15, 16, p=15,..., 18, and p=15,...,22, respectively. The CSI RS may be defined only Δf = 15 kHz. The CSI RS may be referred to Section 6.10.5 of the 3rd generation partnership project (3GPP) TS 36.211 V10.1.0 (2011-03) "Technical Specification Group Radio Access Network; Evolved Universal Terrestrial Radio Access (E-UTRA): Physical channels and modulation (Release 8)".

Regarding transmission of the CSI-RS, a maximum of 32 configurations different from each other may be taken into account to reduce inter-cell interference (ICI) in a multi-cell environment, including a heterogeneous network (HetNet) environment. The CSI-RS configuration is varied according to the number of antenna ports within a cell and CP, and neighboring cells may have the most different configurations. Also, the CSI-RS configuration may be divided into two types depending on a frame structure. The two types includes a type applied to both of FDD frame and TDD frame and a type applied only to the TDD frame. A plurality of CSI-RS configurations may be used for one cell. For those user equipments assuming non-zero transmission power, 0 or 1 CSI configuration may be used. For those user equipments assuming zero transmission power, 0 or more CSI configurations may be used. The user equipment does not transmit the CSI-RS in a special subframe of the TDD frame, in a subframe in which transmission of the CSI-RS causes collision with a synchronization signal, a physical broadcast channel (PBCH), and system information block type 1, or in a subframe in which a paging message is transmitted. Also, in the set S, where S = {15}, S = {15, 16}, S = {17, 18}, S = {19, 20}, or S = {21, 22}, resource elements by which the CSI-RS of one antenna port is transmitted are not used for PDSCH or transmission of the CSI-RS of a different antenna port.

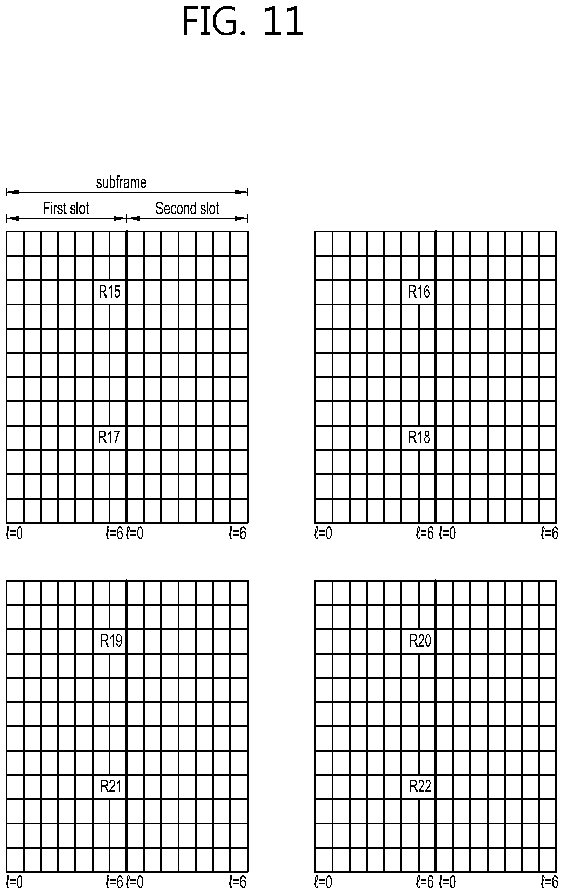

FIG. 11 shows an example of an RB to which a CSI-RS is mapped.

FIG. 11 shows resource elements used for the CSI-RS in a normal CP structure. $R_p$ denotes resource elements used for CSI-RS transmission on an antenna port p. Referring to FIG. 11, the CSI-RS for an antenna port 15 and 16 are transmitted through resource elements corresponding to a third subcarrier (subcarrier index 2) of a sixth and seventh OFDM symbol (OFDM symbol index 5, 6) of a first slot. The CSI-RS for an antenna port 17 and 18 is transmitted through resource elements corresponding to a ninth subcarrier (subcarrier index 8) of a sixth and seventh OFDM symbol (OFDM symbol index 5, 6) of the first slot. The CSI-RS for an antenna port 19 and 20 is transmitted through the same resource elements as the CSI-RS for an antenna port 15 and 16 is transmitted. The CSI-RS for an antenna port 21 and 22 is transmitted through the same resource elements as the CSI-RS for an antenna port 17 and 18 is transmitted.

Meanwhile, an RB may be allocated to a PDSCH in a distributed manner or in a continuous manner. The RB indexed sequentially in the frequency domain is called a physical RB (PRB), and the RB obtained by mapping the PRB one more time is called a virtual RB (VRB). Two types of allocation may be supported for allocation of VRBs. A localized type VRB is obtained from one-to-one direct mapping of PRBs indexed sequentially in the frequency domain. A distributed type VRB is obtained by distributed or interleaved mapping of the PRB according to particular rules. To indicate the VRB type, the DCI format 1A, 1B, 1C, and 1D transmitted to allocate the PDSCH through a PDCCH includes a localized/distributed VRB assignment flag. Whether the VRB is a localized type or a distributed type may be determined through the localized/distributed VRB assignment flag.

Hereinafter, a physical control format indicator channel (PCFICH) is described.

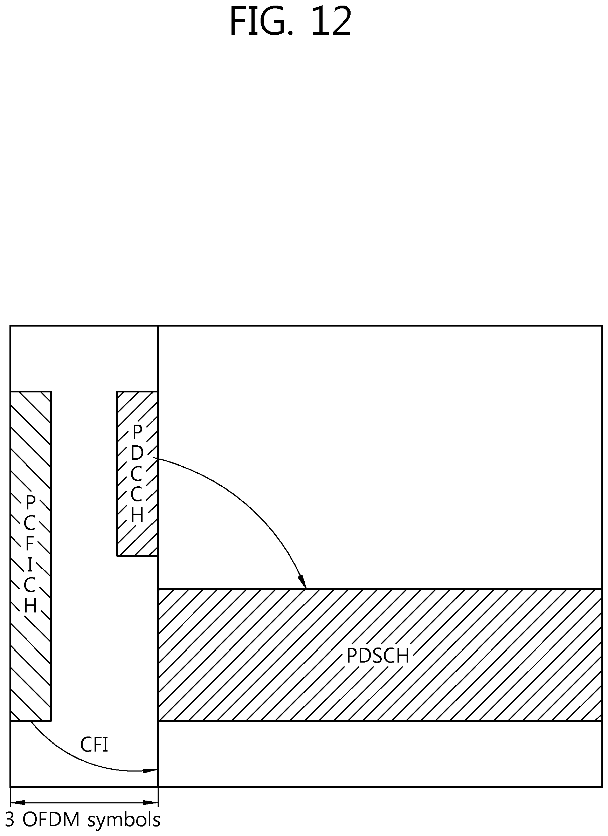

FIG. 12 shows an example where a PCFICH, PDCCH, and PDSCH are mapped to a subframe.

The 3GPP LTE allocates a PDCCH to transmit a downlink control signal intended for controlling user equipments. The region to which PDCCHs of a plurality of user equipments are mapped is called a PDCCH region or a control region. The PCFICH carries information about the number of OFDM symbols used for allocation of the PDCCH within a subframe. The information about the number of OFDM symbols to which the PDCCH is allocated is called a control formation indicator (CFI). All the user equipments within a cell have to search the region to which the PDCCH is allocated, and accordingly, the CIF may be set to a cell-specific value.

In general, the control region to which the PDCCH is allocated is allocated to the OFDM symbols at the forefront of a downlink subframe, and the PDCCH may be allocated to a maximum of three OFDM symbols.

Referring to FIG. 12, CIF is set to 3, and accordingly, the PDCCH is allocated to the aforementioned three OFDM symbols within a subframe. The user equipment detects its own PDCCH within the control region and finds its own PDSCH through the detected PDCCH in the corresponding control region.

The PDCCH in the prior art was transmitted by using transmission diversity in a confined region and does not employ various techniques supporting the PDSCH such as beamforming, multi-user multiple-input multiple-output (MU-MIMO), and best band selection. Also, in case a distributed multi-node system is introduced for system performance enhancement, capacity of the PDCCH becomes short if cell IDs of a plurality of nodes or a plurality of RRHs are identical to each other. Therefore, a new control channel may be introduced in addition to the existing PDCCH. In what follows, a control channel newly defined is called an enhanced PDCCH (e-PDCCH). The e-PDCCH may be allocated in a data region rather than the existing control region. As the e-PDCCH is defined, a control signal for each node is transmitted for each user equipment, and the problem of shortage of the PDCCH region can be solved.

As the control region to which the PDCCH is allocated is specified by the PCFICH, a new channel specifying a region to which the e-PDCCH is allocated may be defined. In other words, an enhanced PCFICH (e-PCFICH) may be newly defined, which specifies a region to which the e-PDCCH is allocated. The e-PCFICH may carry part or all of information required for detecting the e-PDCCH. The e-PDCCH may be allocated to a common search space (CSS) within the existing control region or a data region.

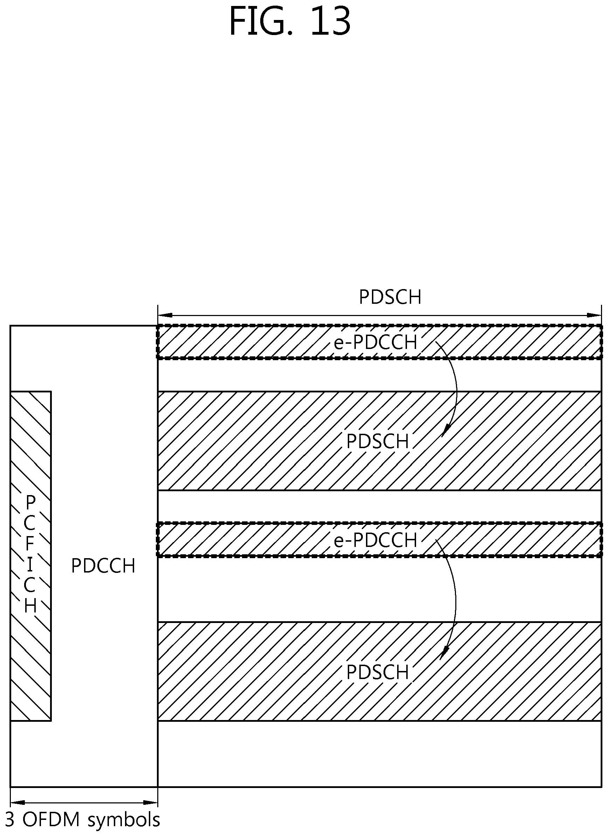

FIG. 13 shows an example of resource allocation through an e-PDCCH.

The e-PDCCH may be allocated to part of a data region rather than the conventional control region. The e-PDCCH is not provided for the existing legacy user equipments, and those user equipments supporting the 3GPP LTE rel-11 (in what follows, they are called rel-11 user equipments) may search for the e-PDCCH. The rel-11 user equipment performs blind decoding for detection of its own e-PDCCH. The information about the minimum region required for detection of the e-PDCCH may be transmitted through a newly defined e-PCFICH or the existing PDCCH. A PDSCH may be scheduled by the e-PDCCH allocated to the data region. A base station may transmit downlink data to each user equipment through the scheduled PDSCH. However, if the number of user equipments connected to each node is increased, the portion of the data region occupied by the e-PDCCH is enlarged. Therefore, the number of blind decoding that has to be performed by the user equipment is also increased, thus increasing degree of complexity.

Meanwhile, wireless communication systems including relay stations are under development recently. A relay station is intended to extend cell coverage and improve transmission performance. A base station may achieve an effect of extending cell coverage by servicing UEs located at the boundaries of the base station through the relay station. Also, as the relay station improves reliability of signal transmission between the base station and UEs, transmission capacity may be increased. The relay station may be utilized in such a case where a UE is located in a shadow region though the UE may stay within coverage of the base station. The uplink and the downlink between the base station and the relay station are backhaul links while the uplink and the downlink between the base station and a UE, or between the relay station and a UE are access links. Hereinafter, a signal transmitted through the backhaul link is called a backhaul signal, and a signal transmitted through the access link is called an access signal.

Relay zones may be defined in a wireless communication system including relay stations. A relay zone refers to an interval within a downlink sub frame transmitted by a base station, where transmission of a control channel (hereinafter, R-PDCCH) for a relay station or transmission of a data channel (hereinafter, R-PDSCH) for the relay station is carried out. In other words, the relay zone indicates an interval within a downlink subframe, where backhaul transmission is carried out.

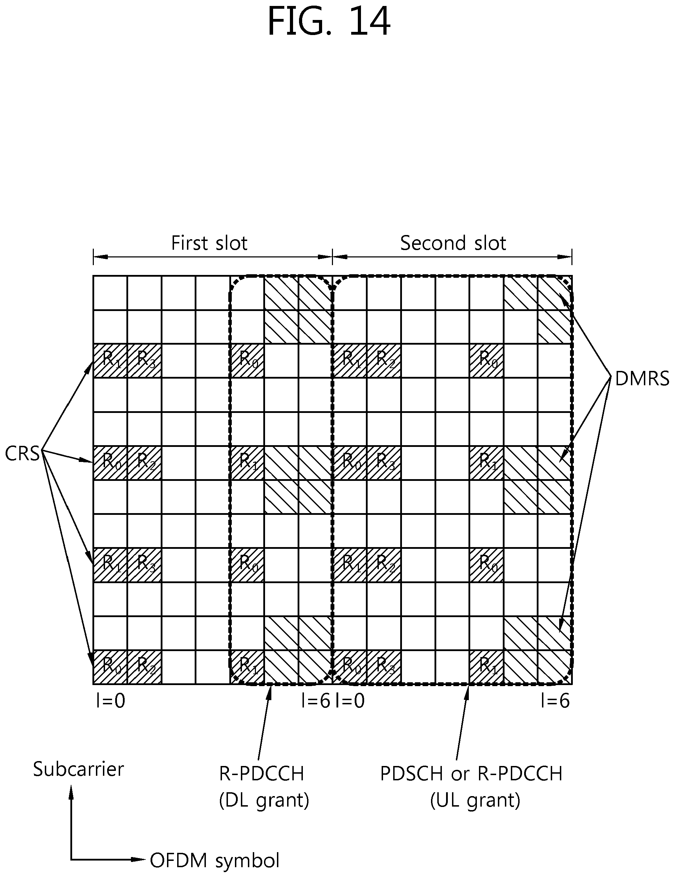

FIG. 14 shows an example of an R-PDCCH allocated to an RB.

Referring to FIG. 14, only a DL grant is allocated to a first slot of the RB, and a UL grant or a PDSCH is allocated to a second slot. In this case, the R-PDCCH may be allocated to the remaining REs other than the REs to which a control region, CRS, and DMRS are mapped. Both of the CRS and DMRS may be used for demodulation of the R-PDCCH. If the DMRS is used for demodulation of the R-PDCCH, the antenna port 7 and a scrambling ID (SCID) of 0 may be used. On the other hand, if the CRS is used for demodulation of the R-PDCCH, the antenna port 0 may be used when only one PBCH transmission antenna is employed, whereas if two or four PBCH transmission antennas are used, Tx diversity mode is activated, and antenna ports 0-1 or 0-3 may be utilized.

In allocating an e-PDCCH newly defined for a multi-node system, the structure of the existing R-PDCCH described in FIG. 14 may be re-used. In other words, only the DL grant may be allocated to the first slot in the RB, and the UL grant or the PDSCH may be allocated in the second slot. Also, the e-PDCCH may be allocated to the remaining REs other than the REs to which the control region, CRS, and DMRS are mapped. By adopting the existing structure, the e-PDCCH may be allocated without exerting a large influence on the existing standards.

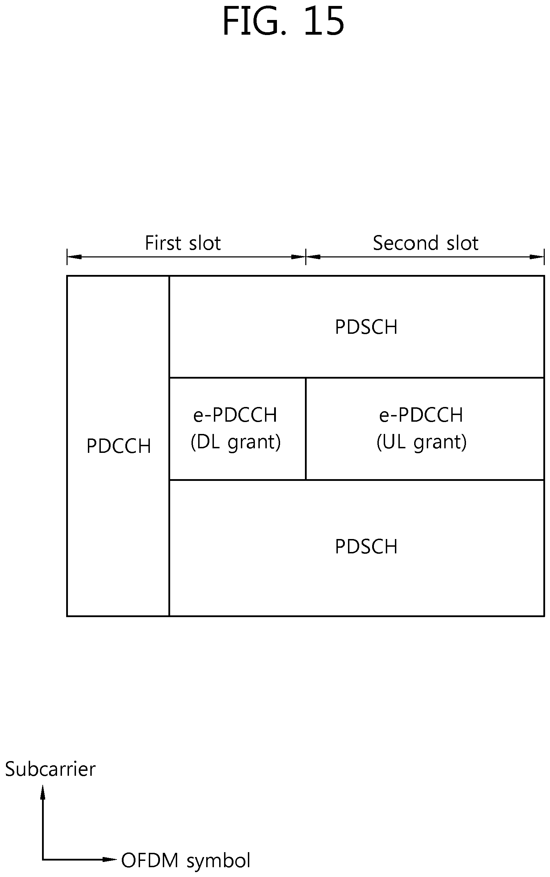

FIG. 15 shows an example of an e-PDCCH allocated to an RB.

Referring to FIG. 15, it is assumed that the e-PDCCH is allocated to both of a first slot and a second slot in the RB. Only a DL grant may be allocated to the e-PDCCH allocated to the first slot, and a UL grant may be allocated to the e-PDCCH allocated to the second slot. The DL grant represents a downlink control information (DCI) format (DCI format 1, 1A, 1B, 1C, 1D, 2, 2A, etc.) which carries downlink control information for the UE, and the UL grant represents a DCI format (DCI format 0, 4) which carries uplink control information for the UE. Since the DL and the UL grant to be detected are divided in the RB for each slot, the UE performs blind decoding to detect the DL grant by configuring a search space in the first slot and also performs blind decoding to detect the UL grant by configuring a search space in the second slot.

Meanwhile, the 3GPP LTE system provides DL transmission modes (1-9) and UL transmission modes (1-2). One transmission mode may be assigned for DL transmissions and UL transmission respectively to each UE through higher-layer signaling. In the DL transmission mode, two DCI formats, which have to be detected by the UE for each transmission mode, exists. Accordingly, the number of blind decoding iterations that needs to be performed by the UE to detect the DL grant is 32 (= 16*2). In the UL transmission mode, the number of DCI formats that have to be detected by the UE for each transmission mode is 1 or 2. For example, if the UL transmission mode is 1, the UE detects the DCI format 0 only, while the UE detects the DCI format 0 and 4 if the UL transmission mode is 2. Therefore, the number of blind decoding iterations that needs to be performed to detect the UL grant is 16 (= 16*1) if the UL transmission mode is 1 while it is 32 (= 16*2) if the UL transmission mode is 2.

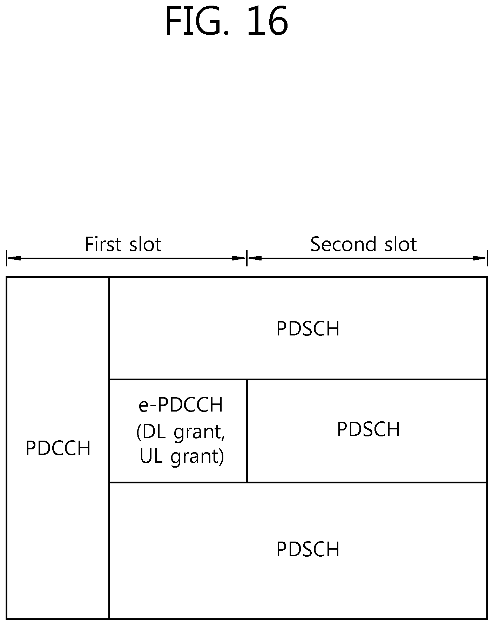

FIG. 16 shows another example of an e-PDCCH allocated to an RB.

Referring to FIG. 16, it is assumed in FIG. 16 that the e-PDCCH is allocated only to the first slot of the RB. In other words, the DL grant and the UL grant may be allocated simultaneously to the e-PDCCH allocated to the first slot. Therefore, the e-PDCCH of the first slot has the DL grant and the UL grant at the same time. The UE performs blind decoding to detect the DL grant and the UL grant by configuring a search space in the first slot. As described above, one transmission mode may be assigned for DL transmission and UL transmission respectively to each UE through higher-layer signaling. In the DL transmission mode, two DCI formats, which have to be detected by the UE for each transmission mode, exists. All the DL transmission modes include the DCI format 1A by default to support a fall-back mode. The number of blind decoding iterations that need to be performed to detect the DL grant is 32 (= 16*2). In the UL transmission mode, the number of DCI formats that have to be detected by the UE for each transmission mode is 1 or 2. If the UL transmission mode is 1, the UE detects the DCI format 0 only, while the UE detects the DCI format 0 and 4 if the UL transmission mode is 2. However, since the DCI format 0 has the same length as that of the DCI format 1A and may be identified by using a one-bit flag, additional blind decoding is not required. Therefore, the number of blind decoding that need to be performed to detect the UL grant is 0 if the UL transmission mode is 1 while it is 16 (= 16*1) if the UL transmission mode is 1.

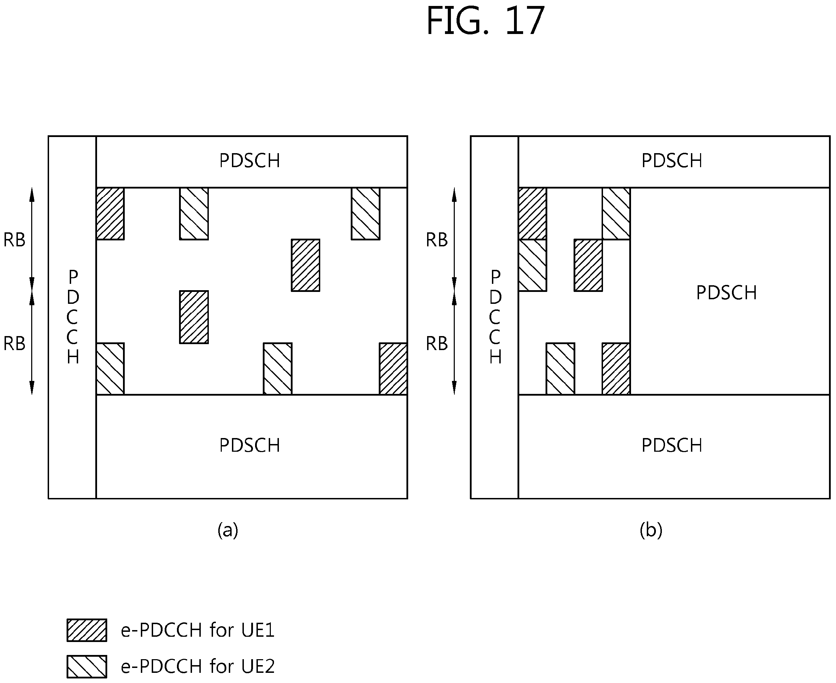

FIG. 17 shows another example of an e-PDCCH allocated to an RB.

Referring to FIG. 17, the e-PDCCH of each UE is multiplexed in time domain or frequency domain. In other words, while a common PRB set is set up, the e-PDCCH of each UE is cross-interleaved into the time domain or frequency domain. FIG. 17-(a) shows the case where the e-PDCCH is allocated to the first and second slot of the RB. FIG. 17-(b) shows the case where the e-PDCCH is allocated only to the first slot of the RB. FIG. 17 shows the situation where the e-PDCCH of each UE is allocated being divided into several parts. Accordingly, diversity gain may be obtained in the time domain or frequency domain.

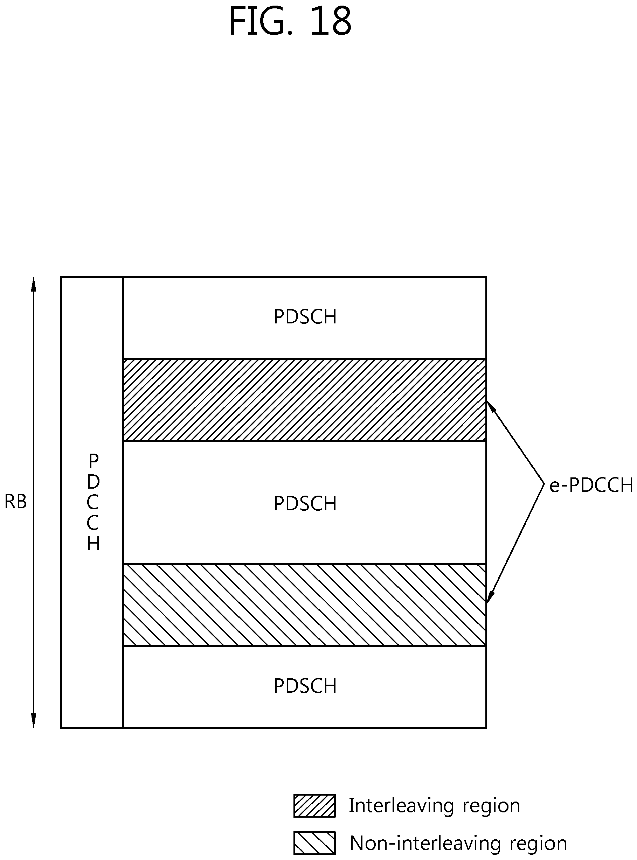

FIG. 18 shows another example of an e-PDCCH allocated to an RB.

Referring to FIG. 18, the region to which the e-PDCCH is allocated comprises an interleaving region where the e-PDCCH of each UE is cross-interleaved into time domain or frequency domain, and a non-interleaving region where the e-PDCCH of each UE is not cross-interleaved. In the interleaving region, as shown in FIG. 17, the diversity gain may be obtained as the e-PDCCH of each UE is cross-interleaved into the time domain or frequency domain. The cross-interleaving for the e-PDCCH may be performed in unit of control channel element (CCE) or slot. For demodulation of the e-PDCCH, a DMRS port suitable for each region needs to be allocated and a DMRS sequence corresponding thereto needs to be configured. The DMRS sequence is based on a physical cell ID (PCI) and for the sake of multiplexing of the e-PDCCH, a flexible PCI may be configured additionally by using such as CSI RS configuration and dedicated signaling.

In addition, the e-PDCCH may be allocated being divided into a resource region for a common search space and a resource region for a UE-specific search space. Similarly, the e-PDCCH may be allocated being divided into a resource region for a first RNTI set and a resource region for a second RNTI set among a plurality of RNTIs.

Hereinafter, a method for allocating an e-PDCCH efficiently is described. In particular, the present invention provides a method for allocating an e-PDCCH to a plurality of UEs efficiently.

In configuring a search space of the e-PDCCH allocated to a data region, whether to allocate one CCE or a plurality of CCEs to a VRB or a PRB may be taken into account. The CCE is a basic unit which constitutes information bits transmitted through a PDCCH. Since the PDCCH comprises 72 bits by default and is modulated into 36 QPSK symbols by QPSK modulation, the CCE occupies 36 REs. The information bits transmitted through the corresponding PDCCH are set to one, two, four, or eight times of 72 bits according to link quality between the UE and the base station, and each case is called an aggregation level 1, 2, 4, and 8 of the PDCCH, respectively. As the e-PDCCH is introduced, an e-CCE, which is a basic unit for constructing information bits of the e-PDCCH, may be newly introduced instead of the conventional CCE. The e-CCE may occupy a different number of REs from the CCE and may support the aggregation level 1, 2, 4, and 8 in the same way as the CCE. Hereinafter, it is assumed that the CCE includes both the CCE for the existing PDCCH and the e-CCE for the e-PDCCH. Also, whether the e-PDCCH of a plurality of UEs is multiplexed into one RB may be taken into consideration.

At first, a method for allocating one or less CCE for an e-PDCCH is described. One or less CCE is allocated to one VRB, PRB, or PRB pair. If one CCE, namely 36 REs are secured to allocate the e-PDCCH to one RB, a search space corresponding to the aggregation level 1, 2, 4, and 8 may be made of 1, 2, 4, and 8 RBs, respectively.

The e-PDCCH may be allocated in an RB, excluding the REs used for transmission of CRS, DMRS, and CSI RS, and the REs in a control region to which the PDCCH may be allocated. Also, since the e-PDCCH enables accurate channel estimation, it is preferable to allocate the e-PDCCH to those REs suitable for demodulation. In other words, the REs around the DMRS are the most appropriate place to allocate the e-PDCCH. However, depending on a configuration, channel estimation for the e-PDCCH may be performed by using the CRS.

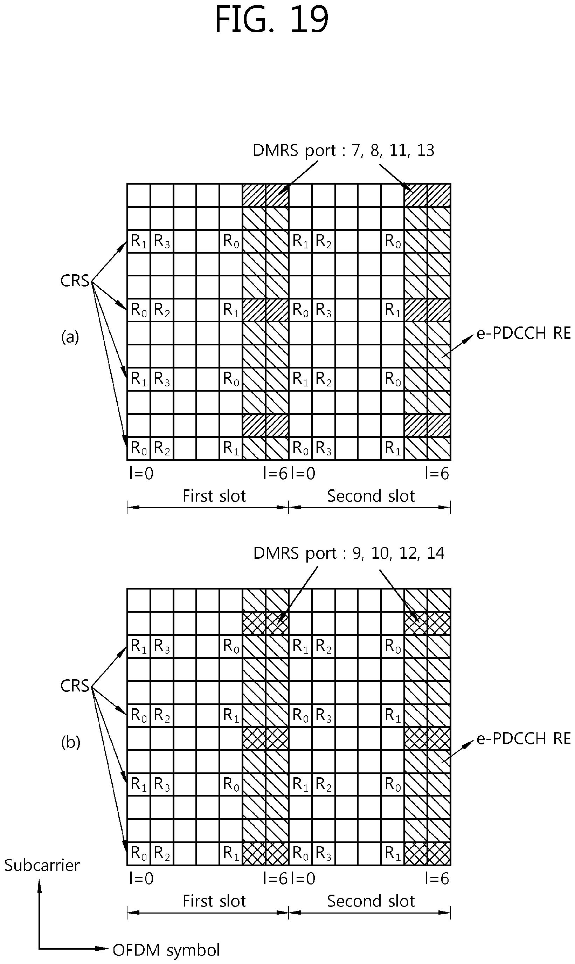

FIG. 19 shows an example of mapping an e-PDCCH to an RB according to a proposed method for allocating an e-PDCCH.

If a DMRS is used for channel estimation to demodulate the e-PDCCH, the e-PDCCH may be allocated to REs within an OFDM symbol used for transmission of a DMRS in an RB. The allocation may be used regardless of whether VRB allocation is localized- or distributed-type allocation. FIG. 19-(a) shows the case where the e-PDCCH is demodulated by using at least one antenna port among the DMRS port 7, 8, 11, and 13. The e-PDCCH may be allocated to the remaining REs of the sixth and seventh OFDM symbol (OFDM symbol index 5 and 6) of each slot except for the REs to which the DMRS may be transmitted. FIG. 19-(b) shows the case where the e-PDCCH is demodulated by using at least one antenna port among the DMRS port 9, 10, 12, and 14. The e-PDCCH may be allocated to the remaining REs of the sixth and seventh OFDM symbol (OFDM symbol index 5 and 6) of each slot except for the REs to which the DMRS may be transmitted. For each case of FIG. 19, the e-PDCCH occupies 36 REs, namely one CCE.

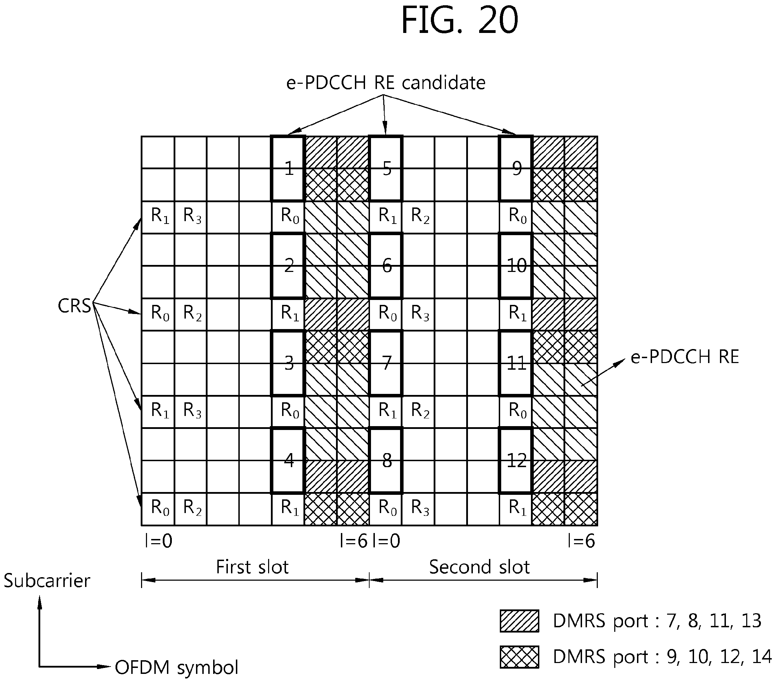

FIG. 20 shows another example of mapping an e-PDCCH to an RB according to a proposed method for allocating an e-PDCCH.

If a DMRS is used for channel estimation to demodulate the e-PDCCH, the e-PDCCH may be allocated to the REs within an OFDM symbol used for transmission of the DMRS in an RB and the REs adjacent to the OFDM symbol. The e-PDCCH may occupy 24 REs except for the RESs that may be used for transmission of the DMRS in the sixth and seventh OFDM symbol (OFDM symbol index 5 and 6) of each slot. In other words, the e-PDCCH may be allocated to the REs corresponding to the third, fourth, fifth, eighth, ninth, and tenth subcarrier (subcarrier index 2, 3, 4, 7, 8, and 9) of the sixth and seventh OFDM symbol of each slot. Also, the e-PDCCH may be allocated to neighboring OFDM symbols adjacent to the OFDM symbol used for transmission of the DMRS. In other words, the e-PDCCH may be allocated to part of REs sets among 1-12 RE sets of FIG. 20. If the e-PDCCH is allocated to six RE sets among the 12 RE sets, the e-PDCCH may occupy a total of 36 REs, namely one CCE. For example, as FIG. 20 shows, the e-PDCCH may be allocated to the RE set 1, 2, 3, 5, 6, and 7. When six RE sets are selected, three of them may be selected from the first slot while the other three RE sets may be selected from the second slot.

Or in FIG. 20, the e-PDCCH may be allocated only to the REs within the OFDM symbol used for transmission of the DMRS in the RB. In other words, the e-PDCCH may occupy only 24 REs within one RB. Since it is not possible to transmit one CCE from a single RB, two RBs are involved to transmit one CCE. The UE is then able to detect the e-PDCCH of the aggregation level 1, 2, 4, and 8 from 2, 3, 6, and 12 RBs and decode the detected e-PDCCH.

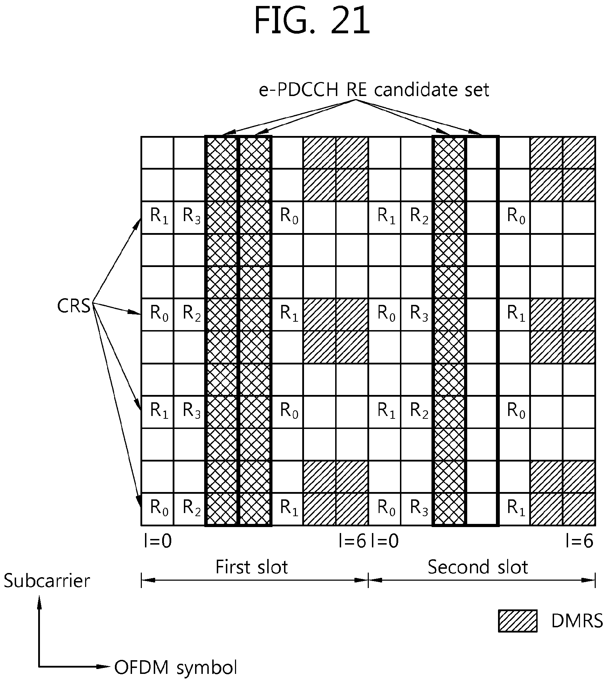

FIG. 21 shows another example of mapping an e-PDCCH to an RB according to a proposed method for allocating an e-PDCCH.

If both the CRS and DMRS are used for channel estimation to demodulate the e-PDCCH, the e-PDCCH may be allocated to the OFDM symbol not used for transmission of the CRS and DMRS. Three or more OFDM symbols are required to form an e-PDCCH occupying one CCE in a single RB. Meanwhile, if only a small number of UEs are present in a cell, the control region to which the PDCCH may be allocated may be set by one or two OFDM symbols rather than three OFDM symbols. FIG. 21 assumes the case where the control region occupies two OFDM symbols in the front part of the RB. In this case, the OFDM symbols to which the e-PDCCH may be allocated are the third and fourth OFDM symbol (OFDM symbol index 2 and 3) of each slot. The e-PDCCH may be allocated to three OFDM symbols among a total of four OFDM symbols. FIG. 21 shows the case where the e-PDCCH is allocated to the third, fourth, and ninth OFDM symbol in the RB.

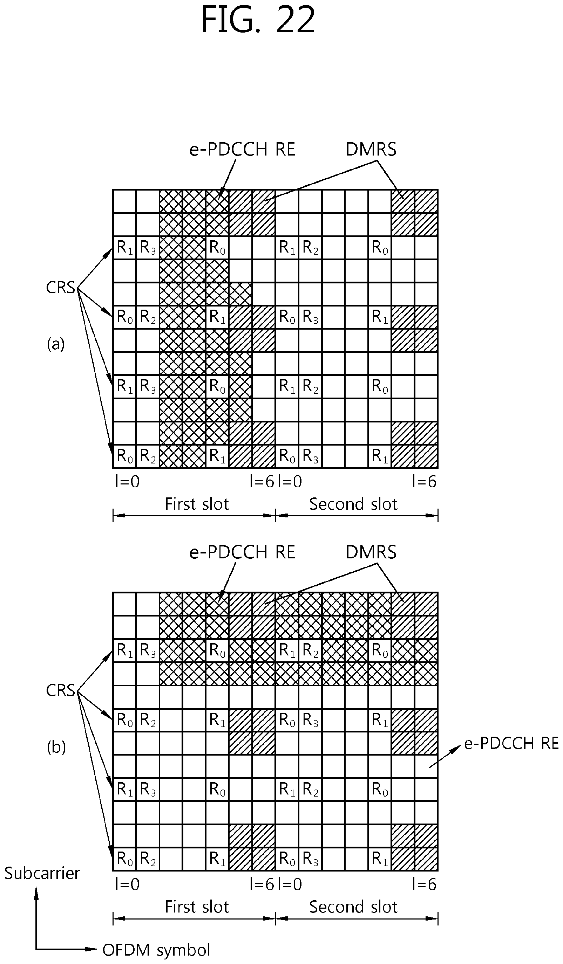

FIG. 22 shows another example of mapping an e-PDCCH to an RB according to a proposed method for allocating an e-PDCCH.

If both the CRS and DMRS are used for channel estimation to demodulate the e-PDCCH, the e-PDCCH may be allocated in such a way as to fill the available REs in time domain or frequency domain one after another. In other words, if the e-PDCCH occupies one CCE in an RB, the e-PDCCH is allocated sequentially to the REs not allocated to the CRS, DMRS, and control region in the time domain and frequency domain. It is assumed in FIG. 22 that the control region is allocated to the two OFDM symbols located in the front of the RB. In FIG. 22-(a), the e-PDCCH is allocated to the empty REs in the time domain one after another. In other words, the e-PDCCH is first allocated to the third and fourth empty OFDM symbol. In the fifth OFDM symbol, the e-PDCCH is allocated to the REs to which the CRS is not allocated. In the sixth OFDM symbol, the e-PDCCH is allocated to the REs to which the DMRS is not allocated. In FIG. 22-(b), the e-PDCCH is allocated to the empty REs in the frequency domain one after another. In other words, the e-PDCCH is allocated sequentially to the REs of the first to fourth subcarrier not allocated to the CRS, DMRS, and control region. For the aggregation level 2, 4, and 8, the above scheme may be applied in the same way to the 2RB, 4RB, and 8RB.

Now, a method for allocating a plurality of CCEs for an e-PDCCH is described. A plurality of CCEs is allocated to one VRB, PRB, or PRB pair. In constructing a search space of aggregation level 1, 2, 4, and 8, since a plurality of CCEs may be allocated to given N RBs, the search space is made of N RBs. N can be 1 or more. Therefore, a plurality of CCEs may be allocated to at least one RB.

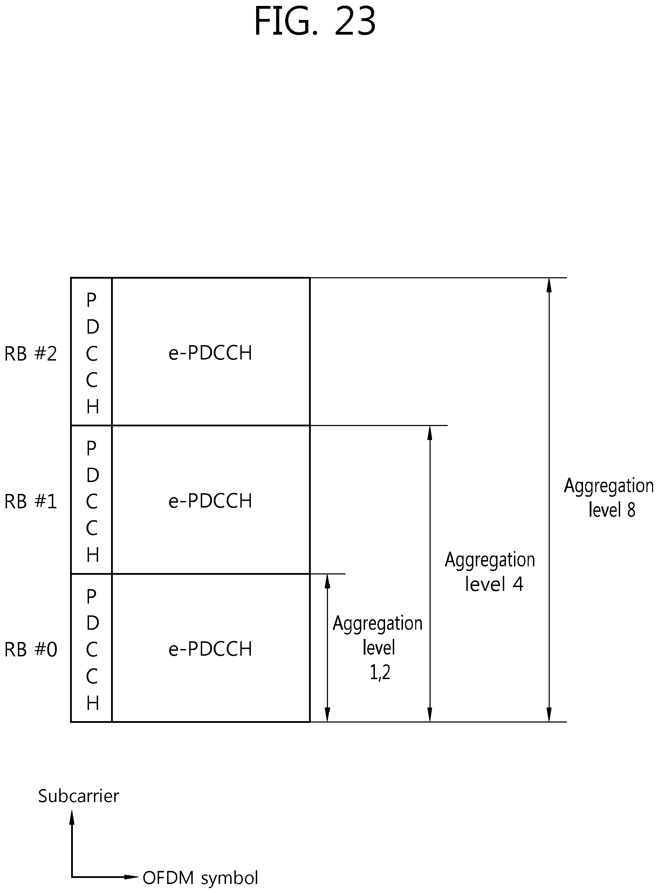

FIG. 23 shows an example of constructing a search space of an e-PDCCH according to an aggregation level when a plurality of CCEs is allocated to the e-PDCCH according to a proposed method for allocating an e-PDCCH.

The e-PDCCH is allocated to REs not used for transmission of the CRS, DMRS, and CSI RS in an RB, and the REs in the control region to which the PDCCH may be allocated. If the control region occupies two OFDM symbols in the front of resource block, the number of REs that can be allocated to the e-PDCCH amounts to 104 in one RB. Suppose one CCE occupies 36 REs in the same way as in the prior art, one RB is required for the aggregation level 1 and 2. Two RBs is required for the aggregation level 4. Three RBs is required for the aggregation level 8. For the sake of convenience, CRS and DMRS have been omitted in FIG. 23. If the aggregation level is restricted in constructing the search space of the e-PDCCH, the e-PDCCH may be detected from a search of a smaller number of RBs. For example, if the aggregation level of the e-PDCCH of each UE is restricted to 4 or below, the UE may detect the e-PDCCH from a search of only two RBs. The remaining REs after allocation of the e-PDCCH in the RB may be emptied or filled with filter bits.

Meanwhile, when a plurality of CCEs is allocated to one VRB, PRB, or PRB pair, all REs within the RB may be used. In the same way as described earlier, search spaces which correspond to the respective aggregation levels may be constructed in the N RBs.

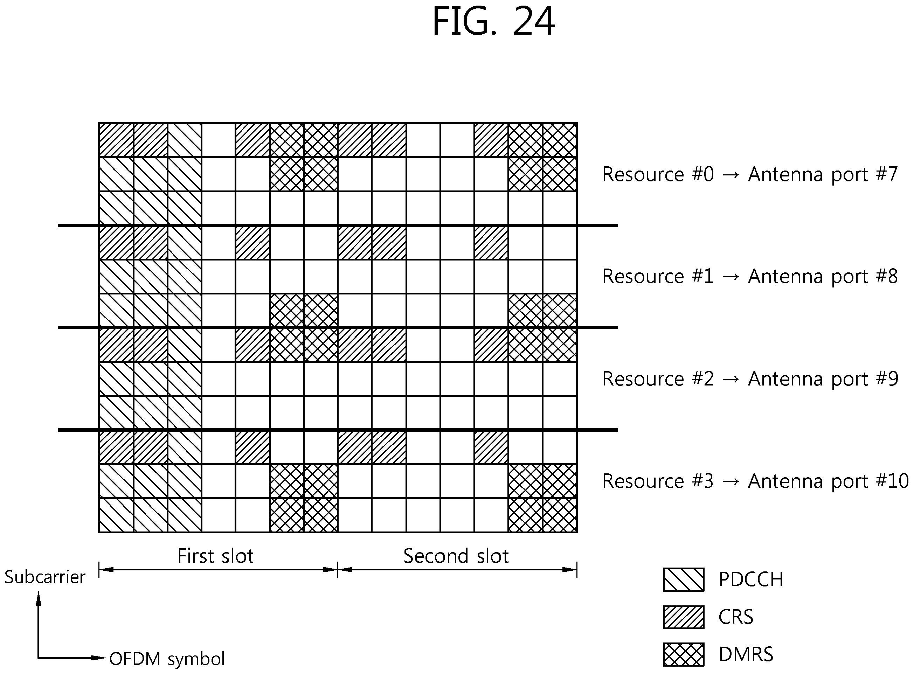

FIG. 24 shows an example of resource division for allocating CCEs in one RB according to a proposed method for allocating an e-PDCCH.

FIG. 24 shows the case where a search space of the e-PDCCH at the aggregation level 1, 2, and 4 is constructed within one RB. One RB is divided into four resources, and the e-PDCCH at the aggregation level L may be allocated to L resources. It is assumed in FIG. 24 that a first resource (resource #0) corresponds to the antenna port 7, a second resource (resource #1) corresponds to the antenna port 8, a third resource (resource #2) corresponds to the antenna port 9, and a fourth resource (resource #3) corresponds to the antenna port 10. However, the present invention is not limited to the above assumption. For demodulation of the e-PDCCH allocated to the respective resources, the UE may use a DMRS predefined or specified by higher-layer signaling. The number of blind decoding iterations performed in one RB is 7 in total, comprising 4 at the aggregation level 1 (related to resources 0, 1, 2, and 3), 2 at the aggregation level 2 (related to resource 0/1 and 2/3), and 1 at the aggregation level 4 (related to resource 0-3). If N RBs, to which the e-PDCCH may be allocated, are present, the UE may perform blind decoding in a unit of each RB.

The resource division of FIG. 24 may also be applied to the case where a search space of the e-PDCCH at the aggregation level 1, 2, 4, and 8 is constructed within two RBs. One RB is divided into four resources, and the e-PDCCH at an aggregation level L is allocated to L resources. For demodulation of the e-PDCCH allocated to the respective resources, the UE may use a DMRS predefined or specified by higher-layer signaling. The number of blind decoding iterations performed in the two RBs amounts to 15, comprising 8 iterations at the aggregation level 1, 4 at the aggregation level 2, 2 at the aggregation level 4, and 1 at the aggregation level 8. If N RBs, to which the e-PDCCH may be allocated, are present, the UE may perform blind decoding in a unit of each RB. For example, if a search space is constructed in four RBs, the UE may perform blind decoding 15 times in the first and second RB, and the UE may perform blind decoding 15 times in the third and fourth RB. If one RB is left after blind decoding is performed in units of two RBs, 4 iterations of blind decoding at the aggregation level 1, 2 at the aggregation level 2, and 1 at the aggregation level 4 is performed for the remaining one RB.

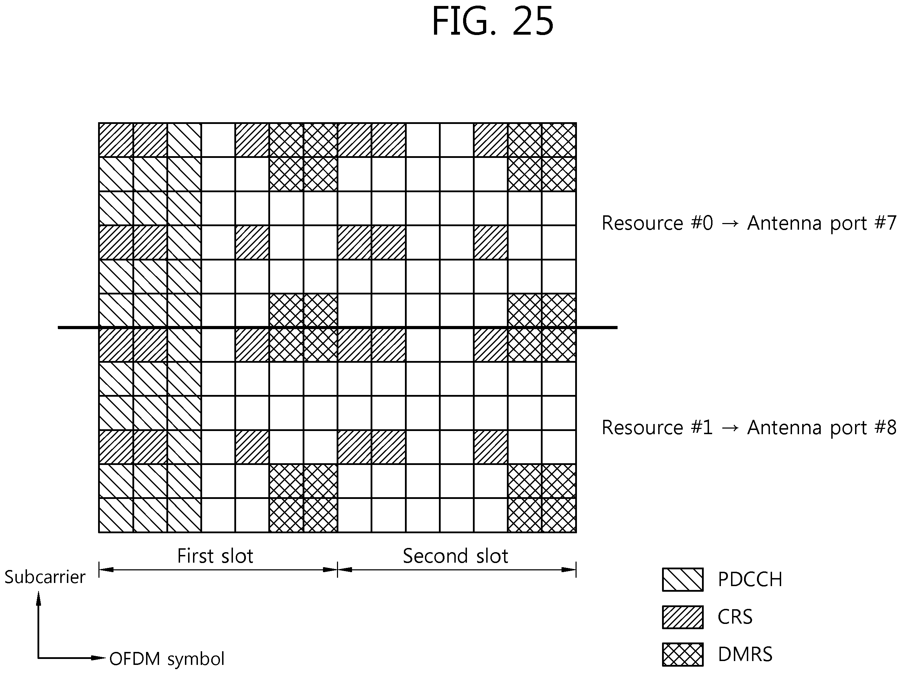

FIG. 25 shows another example of resource division for allocating CCEs in one RB according to a proposed method for allocating an e-PDCCH.

FIG. 25 shows the case where a search space of the e-PDCCH at the aggregation level 1, 2, and 4 is constructed within two RBs. One RB is divided into two resources, and the e-PDCCH at the aggregation level L can be allocated to L resources. It is assumed in FIG. 25 that a first resource (resource #0) corresponds to the antenna port 7 and a second resource (resource #1) corresponds to the antenna port 8. However, the present invention is not limited to the above assumption. For demodulation of the e-PDCCH allocated to the respective resources, the UE may use a DMRS predefined or specified by higher-layer signaling. The number of blind decoding iterations performed in two RBs is 7 in total, comprising 4 at the aggregation level 1, 2 at the aggregation level 2, and 1 at the aggregation level 4. If N RBs, to which the e-PDCCH can be allocated, are present, the UE may perform blind decoding in units of two RBs. If one RB is left after blind decoding is performed in units of two RBs, 2 iterations of blind decoding at the aggregation level 1 and 1 iteration at the aggregation level 2 is performed for the remaining one RB.

The resource division of FIG. 25 may also be applied to the case where a search space of the e-PDCCH at the aggregation level 1, 2, 4, and 8 is constructed within four RBs. One RB is divided into two resources, and the e-PDCCH at an aggregation level L is allocated to L resources. For demodulation of the e-PDCCH allocated to the respective resources, the UE may use a DMRS predefined or specified by higher-layer signaling. The number of blind decoding iterations performed in the four RBs amounts to 15, comprising 8 iterations at the aggregation level 1, 4 at the aggregation level 2, 2 at the aggregation level 4, and 1 at the aggregation level 8. If N RBs, to which the e-PDCCH can be allocated, are present, the UE may perform blind decoding in units of four RBs.

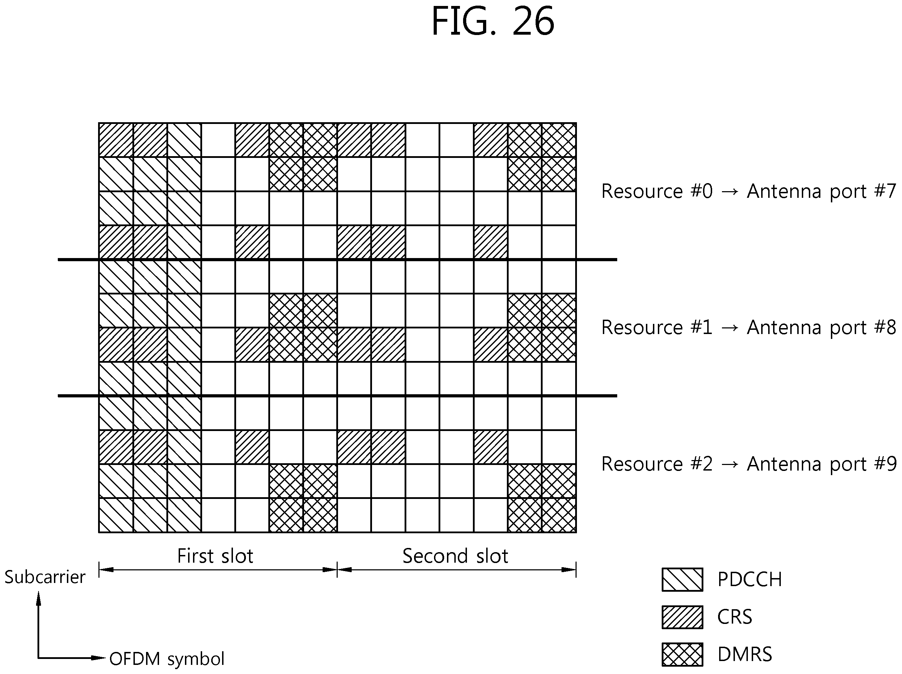

FIG. 26 shows another example of resource division for allocating CCEs in one RB according to a proposed method for allocating an e-PDCCH.

FIG. 26 shows the case where a search space of the e-PDCCH at the aggregation level 1, 2, and 4 is constructed within four RBs. One RB is divided into three resources, and the e-PDCCH at the aggregation level L can be allocated to L resources. It is assumed in FIG. 26 that a first resource (resource #0) corresponds to the antenna port 7, a second resource (resource #1) corresponds to the antenna port 8, and a third resource (resource #2) corresponds to the antenna port 9. However, the present invention is not limited to the above assumption. For demodulation of the e-PDCCH allocated to the respective resources, the UE may use a DMRS predefined or specified by higher-layer signaling. The number of blind decoding iterations performed in four RBs is 21 in total, comprising 12 at the aggregation level 1, 6 at the aggregation level 2, and 3 at the aggregation level 4. If N RBs, to which the e-PDCCH can be allocated, are present, the UE may perform blind decoding in units of four RBs.

On the other hand, a search space of the e-PDCCH at the aggregation level 1 and 2 may be constructed within two RBs. Different from the embodiments of FIGs. 24 to 26, one RB is not divided into a plurality of resources, but is made of a search space of the e-PDCCH at the aggregation level 1. Two RBs are composed of search spaces of the e-PDCCH at the aggregation level 2. If N RBs, to which the e-PDCCH can be allocated, are present, the UE may perform blind decoding in units of four RBs. Extending this scheme, the search space of the e-PDCCH at the aggregation level k1, k2, ..., kn may correspond to k1, k2, ..., kn RBs, respectively (k1<k2<...<kn).

Meanwhile, e-PDCCHs of a plurality of UEs may be distinguished for the respective UEs or multiplexed. It is assumed that the e-PDCCH has been allocated to each UE according to the method described in FIGS. 19 to 26. The e-PDCCH of each UE may be composed of 1, 2, 4, and 8 CCEs for the aggregation level 1, 2, 4, and 8 respectively. If the e-PDCCHs of a plurality of UEs are distinguished for the respective UEs, the e-PDCCHs of the respective UEs are allocated to RBs different from each other, and the e-PDCCHs of the plurality of UEs may be transmitted by concatenating the RBs according to the respective sizes of the CCEs allocated to the corresponding UEs. For example, if the e-PDCCH of a first UE is allocated to two RBs and the e-PDCCH of a second UE is allocated to four RBs, the e-PDCCHs of the two UEs may be transmitted by concatenating the six RBs. The start position of the e-PDCCH of each UE may be notified through the e-PCFICH.

On the other hand, the e-PDCCHs of a plurality of UEs may be multiplexed. The e-PDCCH of each UE may be multiplexed in terms of layer, rank, or spatial axis.

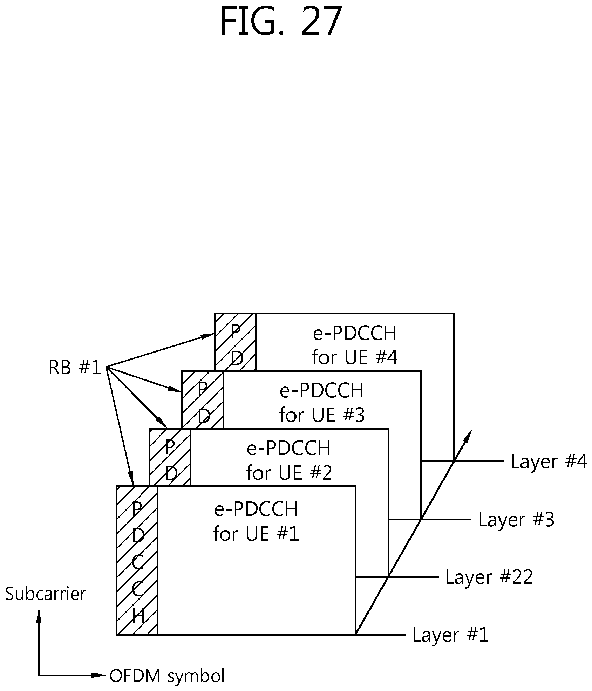

FIG. 27 shows a case where e-PDCCHs of a plurality of UEs are multiplexed into one RB according to a proposed method for allocating an e-PDCCH.

Referring to FIG. 27, the e-PDCCHs of four UEs are multiplexed into one RB along a spatial axis. For the sake of convenience, CRS, DMRS, etc., are omitted. The number of UEs that can be multiplexed into one RB may be varied by each node or scheduler by taking account of link conditions of the UEs.

At this time, the UE may perform blind decoding for each antenna port to detect the e-PDCCH. To perform channel estimation for each layer, the DMRS ports allocated to each UE need to be configured so that the DMRS ports do not overlap each other or orthogonality can be maintained among the DMRS ports. The DMRS port to be used for decoding the e-PDCCH of each UE may be informed to the corresponding UE through higher-layer signaling by the base station or predefined. Or, the DMRS information (antenna port and/or parameters for DMRS sequence generation) for channel estimation of the e-PDCCH may be informed to the UE through higher-layer signaling by the base station or predefined. For example, if the base station informs the UE about the antenna ports 7 and 8, the UE applies blind decoding for the antenna ports 7 and 8 to detect the e-PDCCH. If the same operations may be performed by the CRS, the CRS, too, may be used for channel estimation of each UE.

As described above, since e-PDCCHs of a plurality of UEs may be allocated in one RB through multiplexing of the e-PDCCHs, efficiency of resource utilization can be improved.

Meanwhile, to simplify blind decoding operations of the UE, a search order may be specified. For example, if blind decoding is applied to the e-PDCCH by using antenna ports {k1, k2, k3, k4}, the UE may perform the blind decoding to the e-PDCCH in the order of the antenna ports {k1, k2, k3, k4}. At this time, the UE which has detected the e-PDCCH by using a particular antenna port may assume that the e-PDCCH is transmitted through an antenna port preceding the corresponding antenna port, and the corresponding PDSCH is also transmitted along with other PDSCHs. For example, the UE which has detected the e-PDCCH from the antenna port k3 may assume that other e-PDCCHs are transmitted through the antenna ports k1 and k2, and the PDSCH of the UE is also transmitted along with the other two PDSCHs.

On the other hand, to simplify blind decoding operations, previous blind decoding information may be used. For example, the UE which has detected its own e-PDCCH from an antenna port 8 may perform blind decoding in the order of antenna port 8, 9, 10, and 7. By using the above method, the number of blind decoding iterations required for the UE can be reduced efficiently.

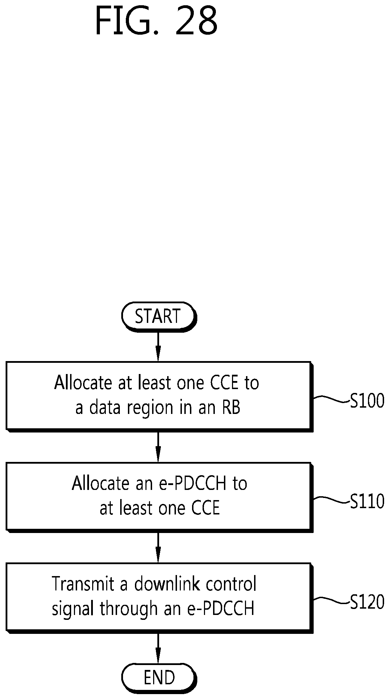

FIG. 28 shows an embodiment of a proposed method for allocating an e-PDCCH.

In step S100, the base station allocates at least one CCE in the data region of an RB. In step S110, the base station allocates the e-PDCCH to at least one CCE. The examples of FIGS. 19 to 27 may be applied to allocation of the e-PDCCH. In step S120, the base station transmits a downlink control signal through the allocated e-PDCCH.

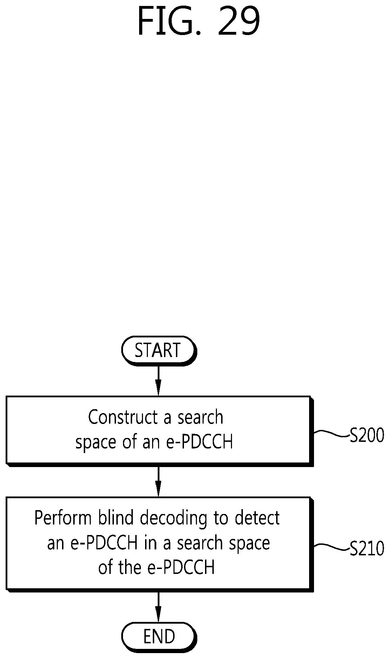

FIG. 29 shows embodiment of a proposed method for detecting an e-PDCCH.

In step of S200, the UE constructs a search space of the e-PDCCH. The search space of the e-PDCCH may correspond to at least one RB depending on the corresponding aggregation level. In step S210, the UE performs blind decoding to detect the e-PDCCH in the constructed search space of the e-PDCCH.

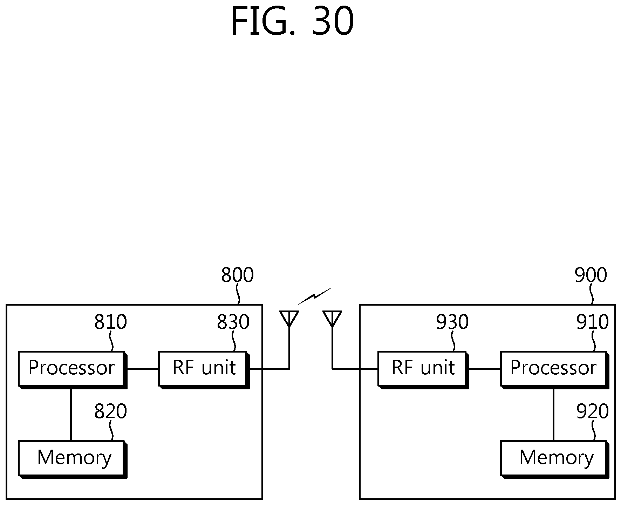

FIG. 30 is a block diagram showing wireless communication system to implement an embodiment of the present invention.

A BS 800 includes a processor 810, a memory 820, and a radio frequency (RF) unit 830. The processor 810 may be configured to implement proposed functions, procedures, and/or methods in this description. Layers of the radio interface protocol may be implemented in the processor 810. The memory 820 is operatively coupled with the processor 810 and stores a variety of information to operate the processor 810. The RF unit 830 is operatively coupled with the processor 810, and transmits and/or receives a radio signal.

A UE 900 may include a processor 910, a memory 920 and a RF unit 930. The processor 910 may be configured to implement proposed functions, procedures and/or methods described in this description. Layers of the radio interface protocol may be implemented in the processor 910. The memory 920 is operatively coupled with the processor 910 and stores a variety of information to operate the processor 910. The RF unit 930 is operatively coupled with the processor 910, and transmits and/or receives a radio signal.

The processors 810, 910 may include application-specific integrated circuit (ASIC), other chipset, logic circuit and/or data processing device. The memories 820, 920 may include read-only memory (ROM), random access memory (RAM), flash memory, memory card, storage medium and/or other storage device. The RF units 830, 930 may include baseband circuitry to process radio frequency signals. When the embodiments are implemented in software, the techniques described herein can be implemented with modules (e.g., procedures, functions, and so on) that perform the functions described herein. The modules can be stored in memories 820, 920 and executed by processors 810, 910. The memories 820, 920 can be implemented within the processors 810, 910 or external to the processors 810, 910 in which case those can be communicatively coupled to the processors 810, 910 via various means as is known in the art.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope and spirit of the present disclosure.

What has been described above includes examples of the various aspects. It is, of course, not possible to describe every conceivable combination of components or methodologies for purposes of describing the various aspects, but one of ordinary skill in the art may recognize that many further combinations and permutations are possible. Accordingly, the subject specification is intended to embrace all such alternations, modifications and variations that fall within the scope of the appended claims.

**Claims**

1. A method for allocating, by a base station (11), a downlink control channel in a wireless communication system (10), the method comprising:

   allocating two or four control channel elements, CCEs, in a physical resource block, PRB, pair, wherein each CCE includes a plurality of resource elements, REs,
   mapping an enhanced physical downlink control channel, ePDCCH, to the at least one CCE, among the two or four CCEs, according to an aggregation level of the ePDCCH, except at least resource elements used for a physical downlink control channel, PDCCH, resource elements used for a cell-specific reference signal, CRS, resource elements used for a demodulation reference signal, DMRS, for the ePDCCH, and resource elements used for a channel state information reference signal, CSI-RS; and
   transmitting a downlink control signal through the e-PDCCH to a user equipment, UE (12).

2. The method of claim 1, wherein the ePDCCH is mapped to two CCEs when the aggregation level of the ePDCCH is two.

3. The method of claim 1, wherein the ePDCCH is mapped to four CCEs when the aggregation level of the ePDCCH is four.

4. The method of claim 1, wherein a search space of the ePDCCH is constructed in the PRB pair according to the aggregation level of the ePDCCH.

5. The method of claim 1, wherein the aggregation level of the ePDCCH is one of 1, 2, 4, or 8.

6. The method of claim 1, further comprising:
   transmitting the DMRS for demodulating, by the UE, the ePDCCH to the UE.

7. A method for receiving, by a user equipment (12), a downlink control signal in a wireless communication system (10), the method comprising:

   monitoring an enhanced physical downlink control channel, ePDCCH, which is mapped to at least one control channel element, CCE, among two or four CCEs allocated in a physical resource block, PRB, pair, according to an aggregation level of the ePDCCH, except at least resource elements used for a physical downlink control channel, PDCCH, resource elements used for a cell-specific reference signal, CRS, resource elements used for a demodulation reference signal, DMRS, for the ePDCCH, and resource elements used for a channel state information reference signal, CSI-RS; and
   receiving a downlink control signal through the ePDCCH from a base station (11).

8. The method of claim 7, wherein the ePDCCH is mapped two CCEs when the aggregation level of the ePDCCH is two.

9. The method of claim 7, wherein the ePDCCH is mapped four CCEs when the aggregation level of the ePDCCH is four.

10. The method of claim 7, wherein a search space of the ePDCCH is constructed in the PRB pair according to the aggregation level of the ePDCCH.

11. The method of claim 7, wherein the aggregation level of the ePDCCH is one of 1, 2, 4, or 8.

12. The method of claim 7, further comprising:
    receiving the DMRS for demodulating the ePDCCH from the base station.

**Patentansprüche**

1. Verfahren, um durch eine Basisstation (11) einen Abwärtsstreckensteuerkanal in einem drahtlosen Kommunikationssystem (10) zuzuteilen, wobei das Verfahren ferner Folgendes umfasst:

   Zuteilen von zwei oder vier Steuerkanalelementen, CCEs, in einem Paar von Blöcken physischer Betriebsmittel, PRB-Paar, wobei jedes CCE mehrere Betriebsmittelelemente, REs, enthält,
Abbilden eines verbesserten physischen Abwärtsstreckensteuerkanals, ePDCCH, auf die mindestens eine CCE unter den zwei oder vier CCEs gemäß einer Zusammenfassungsstufe des ePDCCH außer mindestens Betriebsmittelelementen, die für einen physischen Abwärtsstreckensteuerkanal, PDCCH, verwendet werden, Betriebsmittelelementen, die für ein zellenspezifisches Bezugssignal, CRS, verwendet werden, Betriebsmittelelementen, die für ein Demodulationsbezugssignal, DMRS, für den ePDCCH verwendet werden, und Betriebsmittelelementen, die für ein Kanalzustandsinformationsbezugssignal, CSI-RS, verwendet werden; und
Senden eines Abwärtsstreckensteuersignals über den e-PDCCH zu einem Anwendergerät, UE (12).

2.  Verfahren nach Anspruch 1, wobei der ePDCCH auf zwei CCEs abgebildet wird, wenn die Zusammenfassungsstufe des ePDCCH zwei ist.

3.  Verfahren nach Anspruch 1, wobei der ePDCCH auf vier CCEs abgebildet wird, wenn die Zusammenfassungsstufe des ePDCCH vier ist.

4.  Verfahren nach Anspruch 1, wobei ein Suchraum vom ePDCCH im PRB-Paar gemäß der Zusammenfassungsstufe des ePDCCH konstruiert wird.

5.  Verfahren nach Anspruch 1, wobei die Zusammenfassungsstufe vom ePDCCH eine aus 1, 2, 4 oder 8 ist.

6.  Verfahren nach Anspruch 1, das ferner Folgendes umfasst:
Senden des DMRS, um den ePDCCH durch das UE zu demodulieren, zum UE.

7.  Verfahren, um durch ein Anwendergerät (12) ein Abwärtsstreckensteuersignal in einem drahtlosen Kommunikationssystem (10) zu empfangen, wobei das Verfahren Folgendes umfasst:

Überwachen eines verbesserten physischen Abwärtsstreckensteuerkanals, ePDCCH, der auf mindestens ein Steuerkanalelement, CCE, unter zwei oder vier CCEs, die in einem Paar von Blöcken physischer Betriebsmittel, PRB-Paar, zugeteilt sind, gemäß einer Zusammenfassungsstufe des ePDCCH außer mindestens Betriebsmittelelementen, die für einen physischen Abwärtsstreckensteuerkanal, PDCCH, verwendet werden, Betriebsmittelelementen, die für ein zellenspezifisches Bezugssignal, CRS, verwendet werden, Betriebsmittelelementen, die für ein Demodulationsbezugssignal, DMRS, für den ePDCCH verwendet werden, und Betriebsmittelelementen, die für ein Kanalzustandsinformationsbezugssignal, CSI-RS, verwendet werden, abgebildet ist; und
Empfangen eines Abwärtsstreckensteuersignals über den e-PDCCH von einer Basisstation (11).

8.  Verfahren nach Anspruch 7, wobei der ePDCCH auf zwei CCEs abgebildet wird, wenn die Zusammenfassungsstufe des ePDCCH zwei ist.

9.  Verfahren nach Anspruch 7, wobei der ePDCCH auf vier CCEs abgebildet wird, wenn die Zusammenfassungsstufe des ePDCCH vier ist.

10.  Verfahren nach Anspruch 7, wobei ein Suchraum vom ePDCCH im PRB-Paar gemäß der Zusammenfassungsstufe des ePDCCH konstruiert wird.

11.  Verfahren nach Anspruch 7, wobei die Zusammenfassungsstufe vom ePDCCH eine aus 1, 2, 4 oder 8 ist.

12.  Verfahren nach Anspruch 7, das ferner Folgendes umfasst:
Empfangen des DMRS, um den ePDCCH zu demodulieren, von der Basisstation.

## Revendications

1.  Procédé d'allocation, par une station de base (11), d'un canal de commande de liaison descendante dans un système de communication sans fil (10), le procédé comprenant :

l'allocation de deux ou quatre éléments de canal de commande, CCE, dans une paire de blocs de ressources physiques, PRB, dans lequel chaque CCE comprend une pluralité d'éléments de ressources, RE,
la mise en concordance d'un canal de commande de liaison descendante physique amélioré, ePDCCH, avec l'au moins un CCE, parmi les deux ou quatre CCE, en fonction d'un niveau d'agrégation de l'ePDCCH, à l'exception d'au moins des éléments de ressources utilisés pour un canal de commande de liaison descendante physique, PDCCH, des éléments de ressources utilisés pour un signal de référence spécifique à la cellule, CRS, des éléments de ressources utilisés pour un signal de référence de démodulation, DMRS, pour l'ePDCCH, et des éléments de ressources utilisés pour un signal de référence d'informations d'état de canal, CSI-RS ; et la transmission d'un signal de commande de liaison descendante par l'intermédiaire de l'e-PDCCH, à destination d'un équipement d'utilisateur, UE, (12).

2. Procédé selon la revendication 1, dans lequel l'ePDCCH est mis en concordance avec deux CCE lorsque le niveau d'agrégation de l'ePDCCH est deux.

3. Procédé selon la revendication 1, dans lequel l'ePDCCH est mis en concordance avec quatre CCE lorsque le niveau d'agrégation de l'ePDCCH est quatre.

4. Procédé selon la revendication 1, dans lequel un espace de recherche de l'ePDCCH est construit dans la paire de PRB en fonction du niveau d'agrégation de l'ePDCCH.

5. Procédé selon la revendication 1, dans lequel le niveau d'agrégation de l'ePDCCH est l'un de 1, 2, 4 ou 8.

6. Procédé selon la revendication 1, comprenant en outre :
la transmission du DMRS pour la démodulation, par l'UE, de l'ePDCCH à destination de l'UE.

7. Procédé de réception, par un équipement d'utilisateur (12), d'un signal de commande de liaison descendante dans un système de communication sans fil (10), le procédé comprenant :

la surveillance d'un canal de commande de liaison descendante physique amélioré, ePDCCH, qui est mis en concordance avec au moins un élément de canal de commande, CCE, parmi deux ou quatre CCE alloués dans une paire de blocs de ressources physiques, PRB, en fonction d'un niveau d'agrégation de l'ePDCCH, à l'exception d'au moins des éléments de ressources utilisés pour un canal de commande de liaison descendante physique, PDCCH, des éléments de ressources utilisés pour un signal de référence spécifique à la cellule, CRS, des éléments de ressources utilisés pour un signal de référence de démodulation, DMRS, pour l'ePDCCH, et des éléments de ressources utilisés pour un signal de référence d'informations d'état de canal, CSI-RS ; et la réception d'un signal de commande de liaison descendante par l'intermédiaire de l'e-PDCCH en provenance d'une station de base (11).

8. Procédé selon la revendication 7, dans lequel l'ePDCCH est mis en concordance avec deux CCE lorsque le niveau d'agrégation de l'ePDCCH est deux.

9. Procédé selon la revendication 7, dans lequel l'ePDCCH est mis en concordance avec quatre CCE lorsque le niveau d'agrégation de l'ePDCCH est quatre.

10. Procédé selon la revendication 7, dans lequel un espace de recherche de l'ePDCCH est construit dans la paire de PRB en fonction du niveau d'agrégation de l'ePDCCH.

11. Procédé selon la revendication 7, dans lequel le niveau d'agrégation de l'ePDCCH est l'un de 1, 2, 4 ou 8.

12. Procédé selon la revendication 7, comprenant en outre :
la réception du DMRS pour la démodulation de l'ePDCCH en provenance de la station de base.

# FIG. 1

# FIG. 2

Radio frame

Slot

| #0 | #1 | #2 | ... | #18 | #19 |

Subframe

# FIG. 3

1 downlink slot

7 OFDM symbols

$k=N_{RB} \times 12-1$

$N_{RB} \times 12$ subcarriers

12 subcarriers

Resource block
7x12 resource elements

Resource element (k,ℓ)

$k=0$

$\ell=0$

$\ell=6$

# FIG. 4

# FIG. 5

# FIG. 6

# FIG. 7

Antenna 0

# FIG. 8

Antenna 0

Antenna 1

subframe

slot

Resource element
(k,ℓ)

Not used for
transmission
on the antenna

Reference symbols
on this antenna

RB

R0  R0  R0  R0  R0  R0

R1  R1  R1  R1  R1  R1

ℓ=0    ℓ=6 ℓ=0    ℓ=6

EP 2 731 283 B1

# FIG. 9

EP 2 731 283 B1

# FIG. 10

Antenna port 5

Antenna port 7

Antenna port 8

Antenna port 9

Antenna port 10

# FIG. 11

subframe

First slot | Second slot

R15

R17

$\ell=0$    $\ell=6$ $\ell=0$    $\ell=6$

R16

R18

$\ell=0$    $\ell=6$ $\ell=0$    $\ell=6$

R19

R21

$\ell=0$    $\ell=6$ $\ell=0$    $\ell=6$

R20

R22

$\ell=0$    $\ell=6$ $\ell=0$    $\ell=6$

# FIG. 12

# FIG. 13

PDSCH

PDCCH

e-PDCCH

PDSCH

e-PDCCH

PDSCH

P
C
F
I
C
H

3 OFDM symbols

# FIG. 14

# FIG. 15

| | First slot | | Second slot | |
|---|---|---|---|---|

| PDCCH | PDSCH | | | |
|---|---|---|---|---|
| | e-PDCCH (DL grant) | | e-PDCCH (UL grant) | |
| | PDSCH | | | |

Subcarrier

OFDM symbol

# FIG. 16

First slot | Second slot

| PDCCH | PDSCH |
| | e-PDCCH (DL grant, UL grant) | PDSCH |
| | PDSCH |

FIG. 17

# FIG. 18

RB

PDCCH

PDSCH

PDSCH

PDSCH

e-PDCCH

Interleaving region

Non-interleaving region

# FIG. 19

DMRS port : 7, 8, 11, 13

CRS

(a)

e-PDCCH RE

l=0    l=6 l=0    l=6

First slot    Second slot

DMRS port : 9, 10, 12, 14

CRS

(b)

e-PDCCH RE

l=0    l=6 l=0    l=6

First slot    Second slot

Subcarrier

OFDM symbol

# FIG. 20

e-PDCCH RE candidate

CRS

e-PDCCH RE

| | | | | | | | | | |
|---|---|---|---|---|---|---|---|---|---|
| | | | | 1 | | 5 | | 9 | |
| R1 | R3 | | | R0 | | R1 | R2 | R0 | |
| | | | | 2 | | 6 | | 10 | |
| R0 | R2 | | | R1 | | R0 | R3 | R1 | |
| | | | | 3 | | 7 | | 11 | |
| R1 | R3 | | | R0 | | R1 | R2 | R0 | |
| | | | | 4 | | 8 | | 12 | |
| R0 | R2 | | | R1 | | R0 | R3 | R1 | |

l=0         l=6 l=0         l=6

First slot      Second slot

Subcarrier

OFDM symbol

DMRS port : 7, 8, 11, 13

DMRS port : 9, 10, 12, 14

EP 2 731 283 B1

# FIG. 21

e-PDCCH RE candidate set

CRS

$R_1$ $R_3$ $R_0$ $R_1$ $R_2$ $R_0$

$R_0$ $R_2$ $R_1$ $R_0$ $R_3$ $R_1$

$R_1$ $R_3$ $R_0$ $R_1$ $R_2$ $R_0$

$R_0$ $R_2$ $R_1$ $R_0$ $R_3$ $R_1$

l=0      l=6 l=0      l=6

First slot      Second slot

Subcarrier

OFDM symbol

DMRS

# FIG. 22

# FIG. 23

# FIG. 24

Resource #0 → Antenna port #7

Resource #1 → Antenna port #8

Resource #2 → Antenna port #9

Resource #3 → Antenna port #10

First slot | Second slot

Subcarrier

OFDM symbol

PDCCH

CRS

DMRS

EP 2 731 283 B1

# FIG. 25

Resource #0 → Antenna port #7

Resource #1 → Antenna port #8

First slot | Second slot

Subcarrier

OFDM symbol

- PDCCH
- CRS
- DMRS

EP 2 731 283 B1

# FIG. 26

Resource #0 → Antenna port #7

Resource #1 → Antenna port #8

Resource #2 → Antenna port #9

First slot  Second slot

Subcarrier

OFDM symbol

PDCCH

CRS

DMRS

EP 2 731 283 B1

# FIG. 27

# FIG. 28

START

Allocate at least one CCE to
a data region in an RB —S100

Allocate an e-PDCCH to
at least one CCE —S110

Transmit a downlink control
signal through an e-PDCCH —S120

END

# FIG. 29

```
        ( START )
            |
            v
+--------------------------+
|    Construct a search    |
|   space of an e-PDCCH    |------S200
+--------------------------+
            |
            v
+--------------------------+
| Perform blind decoding to detect |
|  an e-PDCCH in a search space    |------S210
|       of the e-PDCCH             |
+--------------------------+
            |
            v
        ( END )
```

# FIG. 30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2302830 A2

**Non-patent literature cited in the description**

- Technical Specification Group Radio Access Network; Evolved Universal Terrestrial Radio Access (E-UTRA); Physical channels and modulation (Release 8). *3GPP (3rd generation partnership project) TS 36.211,* March 2008
- Technical Specification Group Radio Access Network: Evolved Universal Terrestrial Radio Access (E-UTRA): Physical channels and modulation (Release 8). *3rd generation partnership project (3GPP) TS 36.211,* March 2011

- Technical Specification Group Radio Access Network; Evolved Universal Terrestrial Radio Access (E-UTRA): Physical channels and modulation (Release 8). *3rd generation partnership project (3GPP) TS 36.211,* March 2011